(19) Europäisches Patentamt

European Patent Office

Office européen des brevets

(11) **EP 4 501 523 B1**

(12) **EUROPEAN PATENT SPECIFICATION**

(45) Date of publication and mention
of the grant of the patent:
**08.07.2026 Bulletin 2026/28**

(21) Application number: **23780941.3**

(22) Date of filing: **30.03.2023**

(51) International Patent Classification (IPC):
**B23K 26/073** (2006.01)   **B23K 26/062** (2014.01)
**B23K 26/064** (2014.01)   **B23K 26/21** (2014.01)
**B23K 26/06** (2014.01)

(52) Cooperative Patent Classification (CPC):
**B23K 26/0613; B23K 26/0608; B23K 26/0665;
B23K 26/073; B23K 26/21**

(86) International application number:
**PCT/JP2023/013301**

(87) International publication number:
**WO 2023/190933 (05.10.2023 Gazette 2023/40)**

(54) **LASER PROCESSING MACHINE AND LASER PROCESSING METHOD**

LASERBEARBEITUNGSMASCHINE UND LASERBEARBEITUNGSVERFAHREN

MACHINE DE TRAITEMENT LASER ET MÉTHODE DE TRAITEMENT LASER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **31.03.2022 JP 2022060183
29.03.2023 JP 2023054286**

(43) Date of publication of application:
**05.02.2025 Bulletin 2025/06**

(73) Proprietor: **Amada Co., Ltd.
Isehara-shi, Kanagawa 259-1196 (JP)**

(72) Inventors:
• **KAWAI, Kotaro
Isehara-shi, Kanagawa 259-1196 (JP)**

• **KAGIWADA, Yoshito
Isehara-shi, Kanagawa 259-1196 (JP)**

(74) Representative: **Grünecker Patent- und
Rechtsanwälte
PartG mbB
Leopoldstraße 4
80802 München (DE)**

(56) References cited:
**WO-A1-2017/170890   WO-A1-2022/004827
WO-A1-2022/209929   JP-A- 2001 038 485
JP-A- 2005 254 328   JP-A- S5 886 787
KR-A- 20210 075 030   US-A1- 2002 074 322**

**Description**

The present disclosure relates to a laser processing machine and a laser processing method, see claims 1 and

[BACKGROUND ART]

In recent years, a blue laser is gathering attention as a new light source of a laser processing machine. A wavelength of the blue laser is about 450 nm, which is shorter than the wavelength of a fiber laser of about 1,080 nm. The fiber laser is an infrared laser that has been mainly used as a conventional laser for processing. The blue laser provides an optical absorptance higher than that of the infrared laser, and hence the blue laser is expected to improve processing performance at the time of processing a copper sheet or other workpieces that have conventionally been difficult to be processed by the infrared laser because of its low optical absorptance.

Patent Literature 1 describes a laser welding method of welding a workpiece by superimposing blue laser and infrared laser on each other inside a processing head. When the blue laser and the infrared laser are superimposed on each other, the characteristic of the blue laser having a high optical absorptance and the characteristic of the infrared laser of being capable of easily achieving high output and high luminance can be combined with each other. The laser processing machine configured to process the workpiece by superimposing the blue laser and the infrared laser on each other can process even a thick copper sheet.

Further, regarding the optical absorptance with respect to copper, Non Patent Literature 1 describes that an optical absorptance of green laser having a wavelength of 532 nm has the highest optical absorptance from when copper is preheated until copper is melted (while copper is in a non-molten state). Further, Non Patent Literature 2 describes that blue laser and UV laser having wavelengths shorter than that of the green laser have higher optical absorptances with respect to copper in the non-molten state as compared to the green laser.

Meanwhile, regarding the optical absorptance with respect to copper of infrared laser, Non Patent Literature 1 describes that an optical absorptance of near infrared laser having a wavelength of 1,064 nm is increased along with temperature rise of copper.

[Citation List]

[Patent Literature]

[Patent Literature 1] Chinese Unexamined Patent Application Publication No. 112453696

[Non Patent Literature]

[Non Patent Literature 1] Okamoto, "Studies on Stabilization of Optical Absorptance and Penetration Depth in Copper Micro-Laser Welding)", Report of grant-supported researches the Amada Foundation, THE AMADA FOUNDATION, 2018, No. 31, p. 362-367
[Non Patent Literature 2] S. Engler et al. Process Studies on Laser Welding of Copper with Brilliant Green and Infrared Lasers, Physics Procedia, 12, p. 339-346, 2011.
[Patent Literature 3] KR 2021 0075030 (describing the preamble of claims 1 and 14) shows an apparatus and method for performing laser processing by transmitting laser beams of different wavelengths to the same beam transmission optical system.

[SUMMARY OF INVENTION]

However, when the workpiece is processed by superimposing blue laser and infrared laser having different wavelengths on each other as described in Patent Literature 1, in some cases, the workpiece cannot be processed with high quality. A laser processing machine and a laser processing method with which various workpieces can be processed with higher quality are desired.

A laser processing machine according to a first aspect of the present invention is defined in claim 1, which includes: a first laser oscillator configured to emit a first laser beam having a first wavelength; a first transmission fiber configured to transmit the first laser beam emitted by the first laser oscillator; a second laser oscillator configured to emit a second laser beam having a second wavelength different from the first wavelength; a second transmission fiber configured to transmit the second laser beam emitted by the second laser oscillator; a processing head configured to irradiate a workpiece with the first and second laser beams emitted from ends of the first and second transmission fibers; a beam diameter adjustment mechanism configured to adjust at least one of a first beam diameter and a second beam diameter by operating an optical system for at least one of the first and second laser beams inside the processing head, the first beam diameter being a beam diameter of the first laser beam at a position at which the first laser beam irradiates the workpiece, the second beam diameter being a beam diameter of the second laser beam at a position at which the second laser beam irradiates the workpiece; and a numerical control device configured to control the beam diameter adjustment mechanism to adjust a ratio between the first beam diameter and the second beam diameter in accordance with at least a material of the workpiece.

Further preferred embodiments of the first aspect of the present invention are defined in its dependent claims.

A laser processing method according to a second aspect of the present invention is defined in claim 14, which includes: adjusting at least one of a first beam diameter and a second beam diameter by operating an optical system for at least one of a first laser beam and a second laser beam, the first laser beam being emitted by a first laser oscillator and having a first wavelength, the second laser beam being emitted by a second laser oscillator and having a second wavelength different from the first wavelength, the first beam diameter being a beam diameter of the first laser beam at a position at which the first laser beam irradiates a workpiece, the second beam diameter being a beam diameter of the second laser beam at a position at which the second laser beam irradiates the workpiece; and adjusting by using a numerical control device a ratio between the first beam diameter and the second beam diameter in accordance with at least a material of the workpiece.

The laser processing machine and the laser processing method according to the present invention appropriately control the ratio between the beam diameters of the first and second laser beams at the position at which the first and second laser beams irradiate the workpiece in accordance with at least the material of the workpiece.

In accordance with the laser processing machine and the laser processing method according to the present invention, various workpieces can be processed with high quality.

[BRIEF DESCRIPTION OF DRAWINGS]

[FIG. 1] FIG. 1 is a schematic configuration diagram of a laser processing machine according to a first embodiment.

[FIG. 2] FIG. 2 is a diagram illustrating a beam diameter ratio between first and second laser beams in the laser processing machine according to a first embodiment.

[FIG. 3] FIG. 3 is a diagram illustrating general behavior of light rays before and after entering a single lens.

[FIG. 4A] FIG. 4A is a view illustrating an example of lens configurations of a second collimating lens 22 and a focusing lens 25 in the laser processing machine illustrated in FIG. 1.

[FIG. 4B] FIG. 4B is a view illustrating an example of a change of a distance from the focusing lens to a focal point of a second laser beam when the second collimating lens illustrated in FIG. 4A is driven in an optical axis direction.

[FIG. 5] FIG. 5 is a diagram illustrating an example of a change of the distance from the focusing lens to the focal point of the second laser beam with respect to a change of a distance from a end of a second transmission fiber to the second collimating lens.

[FIG. 6] FIG. 6 is a view illustrating a welding quality in a case in which a beam diameter of the second laser beam is larger than a beam diameter of a first laser beam.

[FIG. 7] FIG. 7 is a view illustrating a welding quality in a case in which the beam diameter of the first laser beam is larger than the beam diameter of the second laser beam.

[FIG. 8] FIG. 8 is a diagram illustrating an example of a processing condition name selection image to which an operator inputs an instruction for selecting a processing condition name.

[FIG. 9] FIG. 9 is a diagram illustrating an example of a processing condition setting image to which the operator inputs an instruction for setting the beam diameter ratio.

[FIG. 10] FIG. 10 is a schematic configuration diagram of a laser processing machine according to a second embodiment.

[FIG. 11] FIG. 11 is a schematic configuration diagram of a laser processing machine according to a third embodiment.

[FIG. 12] FIG. 12 is a schematic configuration diagram of a laser processing machine according to a fourth embodiment.

[FIG. 13] FIG. 13 is a diagram illustrating a first modification example of a method of emitting the first and second laser beams of the laser processing machine according to each of first to fourth embodiments.

[FIG. 14] FIG. 14 is a diagram illustrating a second modification example of the method of emitting the first and second laser beams of the laser processing machine according to each of first to fourth embodiments.

[FIG. 15A] FIG. 15A is a diagram illustrating an example of a beam diameter and a beam profile of the first laser beam when the first laser beam is emitted in FIG. 13 or FIG. 14.

[FIG. 15B] FIG. 15B is a diagram illustrating an example of a beam diameter and a beam profile of the second laser beam when the second laser beam is emitted in FIG. 13 or FIG. 14.

[DESCRIPTION OF EMBODIMENTS]

A laser processing machine and a processing method for the laser processing machine of each embodiment are hereinafter described with reference to the accompanying drawings.

[First Embodiment]

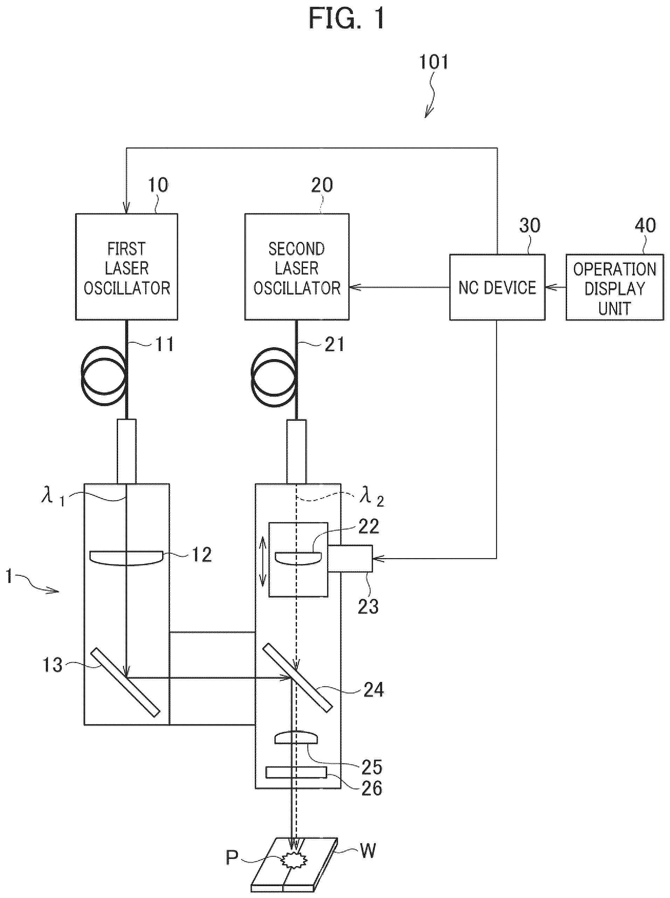

FIG. 1 is a schematic configuration diagram of a laser processing machine 101 according to a first embodiment. In FIG. 1, the laser processing machine 101 is a processing machine configured to superimpose a first laser beam and a second laser beam having a wavelength different from a wavelength of the first laser beam, and to irradiate a workpiece W with the superimposed first and second laser beams, to thereby process the workpiece W. Processing of the workpiece W includes, welding, cutting, hole making (piercing), quenching, and the like of the workpiece W. The workpiece W to be processed is a copper sheet or wrought copper and copper alloy products, for example. The workpiece W to be processed may be a mild steel sheet, an iron-based sheet metal other than the mild steel sheet such as stainless steel, or a sheet metal of aluminum, an aluminum alloy, or the like.

The laser processing machine 101 includes a first laser oscillator 10, a first transmission fiber 11, a second laser oscillator 20, a second transmission fiber 21, and a processing head 1. Further, the laser processing machine 101 includes an numerical control (NC) device 30, an operation display unit 40, and an assist gas supply device (not illustrated). The NC device 30 is an example of a control device configured to control each unit of the laser processing machine 101.

The first laser oscillator 10 emits a first laser beam. As the first laser oscillator 10, a laser oscillator configured to amplify excitation light emitted by a laser diode to emit a laser beam having a predetermined wavelength is suitable. Further, as the first laser oscillator 10, a laser oscillator configured to amplify excitation light emitted by a laser diode to emit a laser beam whose wavelength has been converted through use of a nonlinear optical crystal or the like, or a laser oscillator that directly uses a laser beam emitted by a laser diode is also suitable. In a first embodiment, the first laser oscillator 10 is a blue semiconductor laser oscillator. In a first embodiment, a wavelength $\lambda_1$ (first wavelength) of the first laser beam emitted by the first laser oscillator 10 is 400 nm or more and 460 nm or less. That is, in a first embodiment, the first laser beam is blue laser. It is to be noted that, in place of the blue laser, green laser or UV laser may be used as the first laser beam. The wavelength $\lambda_1$ of the first laser beam is not limited to 400 nm or more and 460 nm or less.

The first transmission fiber 11 transmits the first laser beam emitted by the first laser oscillator 10 to the processing head 1.

The second laser oscillator 20 emits a second laser beam having a wavelength different from the first laser beam having the wavelength $\lambda_1$. As the second laser oscillator 20, a laser oscillator configured to amplify excitation light emitted by a laser diode to emit a laser beam having a predetermined wavelength, or a laser oscillator that directly uses a laser beam emitted by a laser diode is suitable. In a first embodiment, the second laser oscillator 20 is a fiber laser oscillator, for example. In a first embodiment, a wavelength $\lambda_2$ (second wavelength) of the second laser beam emitted by the second laser oscillator 20 is 1,060 nm or more and 1,090 nm or less. That is, in a first embodiment, the second laser beam is infrared laser. The wavelength $\lambda_2$ of the second laser beam is not limited to 1,060 nm or more and 1,090 nm or less.

The second transmission fiber 21 transmits the second laser beam emitted by the second laser oscillator 20 to the processing head 1.

The processing head 1 superimposes the first and second laser beams emitted from the ends of the first and second transmission fibers 11 and 21 on each other, and irradiates the workpiece W with the superimposed first and second laser beams. The processing head 1 includes a first collimating lens 12, a bend mirror 13, a second collimating lens 22, a collimating lens drive motor 23, a dichroic mirror 24, a focusing lens 25, and a protective glass 26. The first collimating lens 12, the bend mirror 13, the second collimating lens 22, the dichroic mirror 24, and the focusing lens 25 are disposed inside the processing head 1 under a state in which their optical axes are adjusted in advance. It is to be noted that, although not illustrated, the processing head 1 is configured to be movable relatively along a surface of the workpiece W under a state in which the processing head 1 is separated from the surface of the workpiece W by a predetermined distance. It is to be noted that the configuration for allowing the processing head 1 to be movable relative to the surface of the workpiece W may be any known configuration, and detailed description thereof is omitted.

The first laser beam emitted from the end of the first transmission fiber 11 enters the first collimating lens 12. The first collimating lens 12 is disposed on an optical axis of the first laser beam, and collimates the first laser beam being incident divergent light to obtain collimated light. The first laser beam being the collimated light emitted from the first collimating lens 12 enters the bend mirror 13. The bend mirror 13 is disposed on the optical axis of the first laser beam, and reflects the incident first laser beam to cause the first laser beam to enter the dichroic mirror 24. The bend mirror 13 bends a traveling direction of the first laser beam by 90 degrees to cause the first laser beam to enter the dichroic mirror 24.

The second laser beam emitted from the end of the second transmission fiber 21 enters the second collimating lens 22. The second collimating lens 22 is disposed on the optical axis of the second laser beam, and collimates the second laser beam being incident divergent light to obtain collimated light. The second laser beam being the collimated light emitted from the second collimating lens 22 enters the dichroic mirror 24.

The collimating lens drive motor 23 operates an optical system for at least one of the first and second laser beams inside the processing head 1. The collimating lens drive motor 23 is controlled by the NC device 30 to be described later. The collimating lens drive motor 23 adjusts, based on the control by the NC device 30, a ratio between a first beam diameter $D_{BL}$ and a second beam diameter $D_{IR}$ (hereinafter referred to as "beam diameter ratio") in accordance with at least a material of the workpiece W. The first beam diameter $D_{BL}$ is a beam diameter of the first laser beam at a position at which the first laser beam irradiates the workpiece W, and the second beam diameter $D_{IR}$ is a beam diameter of the second laser beam at a position at which the second laser beam irradiates the workpiece W. Details of a method of adjusting the beam diameter ratio are described later.

For example, the collimating lens drive motor 23 drives the second collimating lens 22 to move in an optical axis direction of the second laser beam. For example, the collimating lens drive motor 23 operates the optical system for the second laser beam inside the processing head 1 by moving the second collimating lens 22 along the optical axis direction of the second laser beam. It is to be noted that the collimating lens drive motor 23 may drive the first collimating lens 12 to move in an optical axis direction of the first laser beam instead of driving the second collimating lens 22. Further, the collimating lens drive motor 23 may drive the first collimating lens 12 to move in the optical axis direction of the first laser beam, and drive the second collimating lens 22 to move in the optical axis direction of the second laser beam. That is, the collimating lens drive motor 23 is only required to be a mechanism configured to drive at least one of the first and second collimating lenses 12 and 22 to move in the optical axis directions of the first and second laser beams.

The collimating lens drive motor 23 may be a mechanism configured to manually drive at least one of the first and second collimating lenses 12 and 22 in the optical axis directions of the first and second laser beams. The collimating lens drive motor 23 may be a mechanism configured to manually drive one of the first and second collimating lenses and automatically drive the other thereof in the optical axis directions of the first and second laser beams.

It is to be noted that the collimating lens drive motor 23 is an example of a beam diameter adjustment mechanism, and the beam diameter adjustment mechanism is not limited to the collimating lens drive motor 23. The beam diameter adjustment mechanism is only required to be a mechanism configured to operate the optical system for the at least one of the first and second laser beams within a range of emission from the ends of the first and second transmission fibers 11 and 21 to superimposing of the first and second laser beams inside the processing head 1.

The dichroic mirror 24 is disposed on the optical axis of the second laser beam, and the first laser beam and the second laser beam each being collimated light enter the dichroic mirror 24. The dichroic mirror 24 reflects the first laser beam reflected by the bend mirror 13 to enter the dichroic mirror 24, and transmits the second laser beam. The dichroic mirror 24 bends the traveling direction of the first laser beam by 90 degrees to cause the first laser beam to enter the focusing lens 25. Further, the dichroic mirror 24 transmits the second laser beam to cause the second laser beam to enter the focusing lens 25. That is, the first and second laser beams are superimposed on each other by the dichroic mirror 24.

The focusing lens 25 focuses the first and second laser beams being superimposed collimated light on a processing point P of the workpiece W to irradiate the processing point P of the workpiece W with focused light of the first and second laser beams. The focused light of the first and second laser beams passes through the protective glass 26 to be applied to the processing point P of the workpiece W. It is to be noted that the focusing lens 25 may be configured to move closer to or away from the workpiece W by a manual or automatic mechanism.

The NC device 30 is a control device configured to control each unit of the laser processing machine 101. The NC device 30 is configured of a computer and includes a central processing unit (CPU), a read-only memory (ROM), and a random-access memory (RAM). The operation display unit 40 is connected to the NC device 30.

The NC device 30 implements various functions by the CPU reading out various programs from the ROM, loading the programs in the RAM, and executing the loaded programs.

The NC device 30 executes a processing program to control the laser processing machine 101. The processing program includes codes for defining the operation of the laser processing machine 101 required for welding a product by welding the workpiece W along a processing path. The processing program is created by an external device such as a computer-aided manufacturing (CAM), and the NC device 30 acquires the processing program from the external device. It is to be noted that the external device may store the created processing program in a database inside an unillustrated data management server. In this case, the NC device 30 acquires the processing program by reading out the processing program stored in the database of the data management server.

The processing program describes codes for defining a series of operations of the laser processing machine 101 required for processing the product, such as setting of a processing condition, emission start of the first and second laser beams (emission ON) and emission stop of the first and second laser beams (emission OFF), and movement of the processing head 1 from a certain processing path to a next processing path. For example, when a product is to be welded, the processing program describes codes for moving the processing head 1 (first and second laser beams) along the processing path of the product. Further, when a plurality of products are welded from the workpiece W, the processing program describes codes for each of the plurality of products. In a first embodiment, the NC device 30 controls the first and second laser oscillators 10 and 20 so that the first and second laser beams irradiate the workpiece W at the same time.

Further, the NC device 30 controls the collimating lens drive motor 23 to adjust the beam diameter ratio in accordance with at least the material of the workpiece W. In a first embodiment, the NC device 30 adjusts the beam diameter ratio so that the first beam diameter $D_{BL}$ becomes larger than the second beam diameter $D_{IR}$. Further, in a first embodiment, the NC device 30 controls the collimating lens drive motor 23 based on an instruction for setting the beam diameter ratio received by the operation display unit 40. The NC device 30 controls, while controlling the collimating lens drive motor 23, each unit of the laser processing machine 101 so that the workpiece W is processed based on the processing program.

The operation display unit 40 receives the instruction for setting the beam diameter ratio from an operator of the laser processing machine 101. The operation display unit 40 displays an image required for the operator to input the instruction for setting the beam diameter ratio. The operator operates the operation display unit 40 to input the instruction for setting the beam diameter ratio. The operator can input the instruction for setting the beam diameter ratio to the NC device 30 by operating the operation display unit 40. The operation display unit 40 transmits the instruction input by the operator to the NC device 30. A specific method of receiving the instruction for setting the beam diameter ratio and adjusting the beam diameter ratio is described later.

The operation display unit 40 may be a touch panel mounted to a liquid crystal panel, for example so that input operation can be performed in accordance with information displayed on the liquid crystal panel. The operation display unit 40 may include a display unit and an operation unit that are separate units.

When the workpiece W is cut, an unillustrated assist gas supply device supplies an assist gas to the processing head 1 at the time of cutting the workpiece W. The assist gas supply device can use oxygen, nitrogen, or air as the assist gas when the workpiece W to be processed is an iron-based material. When oxygen is used as the assist gas, the assist gas supply device controls a blowing state of the gas so as to prevent excessive combustion. Further, the assist gas supply device can use nitrogen or air as the assist gas when the workpiece W is a stainless steel-based material. The assist gas supplied to the processing head 1 is blown to the workpiece W from an opening of the processing head 1. The assist gas discharges a molten metal in a kerf width in which the workpiece W is melted.

When the workpiece W is welded, an unillustrated shielding gas supply device supplies a shielding gas to the processing head 1 to prevent an oxidation reaction of the workpiece W at the time of welding the workpiece W. Nitrogen or argon can be used as the shielding gas. The shielding gas supplied to the processing head 1 is blown to the workpiece W from the opening of the processing head 1. As another example, a shielding gas blowing nozzle (not illustrated) may be provided on a side surface of the processing head 1 to blow the shielding gas to the workpiece W from the side surface. The method of blowing the shielding gas is not particularly limited and may be a method of blowing the shielding gas from a plurality of locations divided into main and sub-locations.

The laser processing machine 101 configured as described above can process the workpiece W with the superimposed first and second laser beams to produce a product having a predetermined shape, pattern, or the like.

[Method of Adjusting Beam Diameter Ratio]

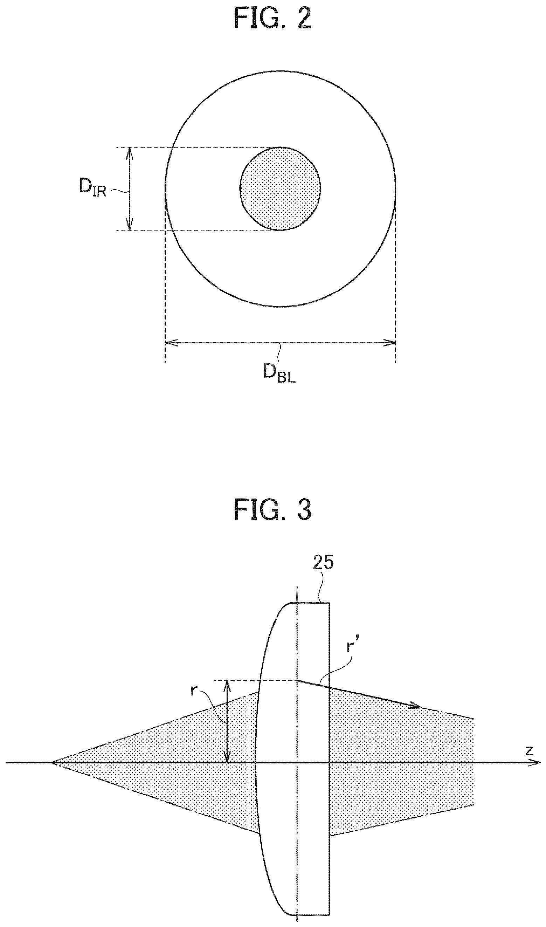

Here, the method of adjusting the beam diameter ratio is described with reference to FIG. 2 to FIG. 5. FIG. 2 illustrates the beam diameter ratio between the first and second laser beams in the laser processing machine 101. The beam diameter ratio refers to a ratio between the first beam diameter $D_{BL}$ and the second beam diameter $D_{IR}$. The first beam diameter $D_{BL}$ is a beam diameter of the first laser beam at a position at which the first laser beam emitted by the processing head 1 irradiates the workpiece W, and the second beam diameter $D_{IR}$ is a beam diameter of the second laser beam at a position at which the second laser beam irradiates the workpiece W. The beam diameter ratio is calculated by dividing the first beam diameter $D_{BL}$ by the second beam diameter $D_{IR}$, for example. An appropriate value is set for the beam diameter ratio in accordance with at least the material of the workpiece W. The beam diameter ratio may be set in accordance with a processing condition that is a combination of the material of the workpiece W, a plate thickness, a thickness of the processing lens (focusing lens 25), and the like.

FIG. 3 illustrates general behavior of light rays before and after entering a single lens. First, in FIG. 3, it is assumed that there is a focusing lens 25 (single lens) having a focal length f on a rear side of a linear portion having a length z filled with a uniform medium. In this case, when a light ray at a freely-selected position z is represented by a column vector, the light ray at the freely-selected position z can be expressed by the following Formula (1). In Formula (1), $(r_{out}, r'_{out})$ indicates a radiation light ray from the focusing lens 25. In Formula (1), $(r_{in}, r'_{in})$ indicates an incident light ray to the focusing lens 25. In Formula (1), r indicates a distance from an optical axis to the light ray at a position at which the light ray enters the focusing lens 25, and r' indicates an inclination of the light ray.

[Formula 1]

$$\begin{pmatrix} rout \\ r'out \end{pmatrix} = \begin{pmatrix} 1 & z \\ -\frac{1}{f} & \left(1 - \frac{z}{f}\right) \end{pmatrix} \begin{pmatrix} rin \\ r'in \end{pmatrix} \quad \cdots \quad (1)$$

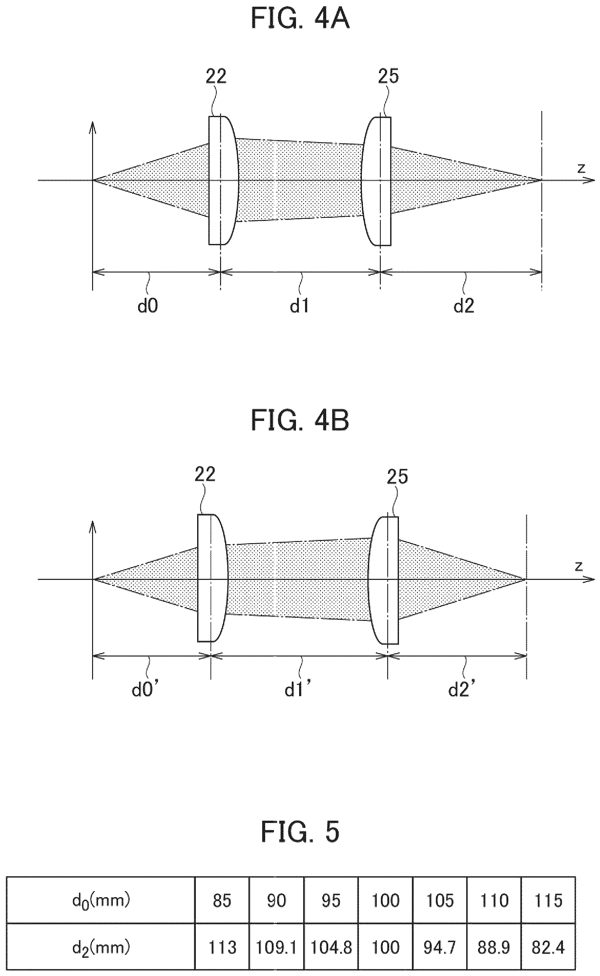

FIG. 4A illustrates an example of lens configurations of the second collimating lens 22 and the focusing lens 25 in the laser processing machine 101 illustrated in FIG. 1. In FIG. 4A, a focal length of the second collimating lens 22 is represented by f1, and a focal length of the focusing lens 25 is represented by f2. Further, a distance from the end of the second transmission fiber 21 to the second collimating lens 22 is represented by d0, a distance from the second collimating lens 22 to the focusing lens 25 is represented by d1, and a distance from the focusing lens 25 to the focal point of the second laser beam is represented by d2. In this case, Formula (1) can be expressed by Formula (2) below.
[Formula 2]

$$\begin{pmatrix} rout \\ r'out \end{pmatrix} = \begin{pmatrix} 1 & d2 \\ 0 & 1 \end{pmatrix} \begin{pmatrix} 1 & d1 \\ -\frac{1}{f2} & \left(1 - \frac{d1}{f2}\right) \end{pmatrix} \begin{pmatrix} 1 & d0 \\ -\frac{1}{f1} & \left(1 - \frac{d0}{f1}\right) \end{pmatrix} \quad \cdots \quad (2)$$

Further, Formula (2) can be expressed by Formula (3) below.
[Formula 3]

$$rout = A \cdot rin + B \cdot r'in$$

$$r'out = C \cdot r'in + D \cdot r'in \quad \cdots \quad (3)$$

Symbols A, B, C, and D in Formula (3) can be calculated from Formula (2). Symbols A, B, C, and D in Formula (3) can be expressed by Formula (4) below from Formula (2).
[Formula 4]

$$A = 1 - \frac{d1}{f1} + d2 \left( -\frac{1}{f1} - \frac{1}{f2} + \frac{d1}{f1f2} \right)$$

$$B = d2 \left( 1 - \frac{d0}{f1} - \frac{d0 + d1}{f2} + \frac{d0d1}{f1f2} \right) + d0 + d1 - \frac{d0d1}{f1}$$

$$C = -\frac{1}{f1} - \frac{1}{f2} + \frac{d1}{f1f2}$$

$$D = 1 - \frac{d0}{f1} - \frac{d0 + d1}{f2} + \frac{d0d1}{f1f2}$$

$$\cdots \quad (4)$$

In this case, in a first embodiment, the Formula including B in Formula (3) can be regarded as B·r'in=0, that is, B=0. Thus, from the Formula of B in Formula (4), the distance d2 from the focusing lens 25 to the focal point of the second laser beam can be expressed by Formula (5) below.
[Formula 5]

$$d2 = \frac{-d0 - d1 + \dfrac{d0d1}{f1}}{1 - \dfrac{d0}{f1} - \dfrac{d0 + d1}{f2} + \dfrac{d0d1}{f1f2}}$$

$$\ldots \quad (5)$$

As indicated by Formula (5), when the distance d0 from the end of the second transmission fiber 21 to the second collimating lens 22 changes, the distance d2 from the focusing lens 25 to the focal point of the second laser beam changes. FIG. 4B illustrates an example of a change of the distance from the focusing lens 25 to the focal point of the second laser beam when the second collimating lens 22 illustrated in FIG. 4A is driven in the optical axis direction. It is assumed that, as illustrated in FIG. 4B, the second collimating lens 22 is driven in a negative direction of the optical axis, and the distance d0 from the end of the second transmission fiber 21 to the second collimating lens 22 changes to a distance d0'. In this case, the distance d2 from the focusing lens 25 to the focal point of the second laser beam moves in the negative direction of the optical axis to change to a distance d2'.

FIG. 5 illustrates an example of a change of the distance d2 from the focusing lens 25 to the focal point of the second laser beam with respect to a change of the distance d0 from the end of the second transmission fiber 21 to the second collimating lens 22. In FIG. 5, it is assumed that the focal length f1 of the second collimating lens 22 is 100 mm, the focal length f2 of the focusing lens 25 is 100 mm, and the distance d1 from the second collimating lens 22 to the focusing lens 25 is 300 mm. In this case, when the distance d0 is 85 mm, the distance d2 is 113 mm. When the distance d0 is 90 mm, the distance d2 is 109.1 mm. When the distance d0 is 95 mm, the distance d2 is 104.8 mm. When the distance d0 is 100 mm, the distance d2 is 100 mm. When the distance d0 is 105 mm, the distance d2 is 94.7 mm. When the distance d0 is 110 mm, the distance d2 is 88.9 mm. When the distance d0 is 115 mm, the distance d2 is 82.4 mm.

As described above, when the second collimating lens 22 is driven in the optical axis direction of the second laser beam, the distance d2 from the focusing lens 25 to the focal point of the second laser beam can be changed. By changing the distance d2, the second beam diameter $D_{IR}$ can be changed, and the beam diameter ratio can be adjusted in accordance with at least the material of the workpiece W. Similarly, the beam diameter ratio can be adjusted even when the first beam diameter $D_{BL}$ is changed by driving the first collimating lens 12 in the optical axis direction of the first laser beam.

Further, the beam diameter ratio can be adjusted even when the first beam diameter $D_{BL}$ is changed by driving the first collimating lens 12 in the optical axis direction of the first laser beam and the second beam diameter $D_{IR}$ is changed by driving the second collimating lens 22 in the optical axis direction of the second laser beam. That is, the beam diameter adjustment mechanism is only required to be a mechanism configured to drive at least one of the first and second collimating lenses 12 and 22 in the optical axis directions of the first and second laser beams. Further, the beam diameter adjustment mechanism may be a mechanism configured to move at least one of the ends of the first and second transmission fibers 21 in the optical axis directions of the first and second laser beams in order to change the distance d0 from the end of the second transmission fiber 21 to the second collimating lens 22.

It is to be noted that, other than adjustment of the beam diameter ratio by driving at least one of the first and second collimating lenses 12 and 22, there may be employed a configuration in which at least one of the first and second collimating lenses 12 and 22 and the focusing lens 25 are driven in the optical axis directions of the first and second lasers. In this case, the beam diameter ratio can be adjusted by changing both of the distance d1 from the first and second collimating lenses 12 and 22 to the focusing lens 25 and the distance d2 from the focusing lens 25 to the focal points of the first and second laser beams in Formula (5).

[Influence of Beam Diameter Ratio on Processing Quality]

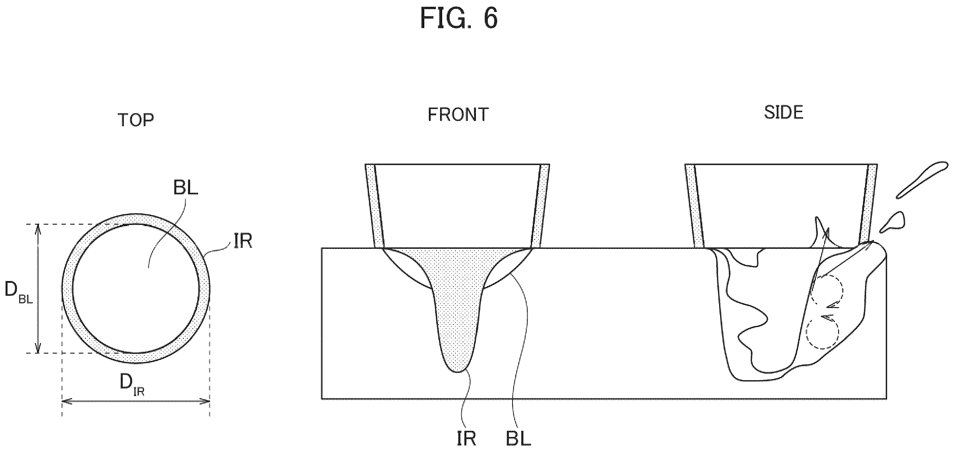

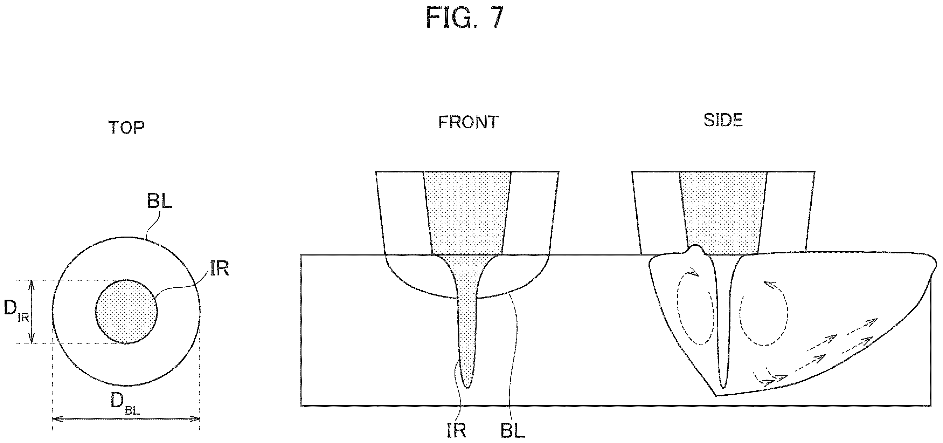

Here, an influence of the beam diameter ratio on a processing quality is described with reference to FIG. 6 and FIG. 7. FIG. 6 and FIG. 7 illustrate a relationship between the beam diameter ratio and the welding quality. In a first embodiment, the first laser beam is blue laser BL having a wavelength of $\lambda_1$, and the second laser beam is fiber laser IR having a wavelength of $\lambda_2$. As illustrated in FIG. 6, when the second beam diameter $D_{IR}$ is larger than the first beam diameter $D_{BL}$, a ratio of the first beam diameter $D_{BL}$ to the second beam diameter $D_{IR}$ is decreased. In this case, a range in which a molten pool is formed by the first laser beam is reduced at a welding portion, and overheating by the second laser beam becomes dominant. Thus, rapid temperature change and disturbance of a metal flow of a melting portion more likely occur at the welding portion. As a result, a keyhole may become unstable, spatters may adhere around the welding portion, or blowholes may be generated. As a specific example, when the beam diameter ratio was 0.91, a first laser beam with an output of 2 kW and a second laser beam with an output of 3 kW were superimposed on a copper sheet having a plate thickness of 1 mm, and welding was performed with the processing head 1 at a speed of 8 m/min, adhesion of spatters occurred and the bead surface became unstable.

Meanwhile, as illustrated in FIG. 7, when the first beam diameter $D_{BL}$ is larger than the second beam diameter $D_{IR}$, the ratio of the first beam diameter $D_{BL}$ to the second beam diameter $D_{IR}$ is increased. In this case, the molten pool is formed by the first laser beam on the outer side of the second laser beam. When the beam diameter ratio is appropriate, the molten pool is formed in a sufficient range on the outer side of the second laser beam, and the keyhole of the second laser beam at a center portion becomes stable. Further, a rear metal flow also becomes stable. Thus, there is no sudden disturbance of the metal flow to the upper part, spatters are less likely to be generated, and the bead surface becomes stable. As a specific example, when the beam diameter ratio was 2.21, a first laser beam with an output of 2 kW and a second laser beam with an output of 3 kW were superimposed on a copper sheet having a plate thickness of 1 mm, and welding was performed with the processing head 1 at a speed of 8 m/min, it is confirmed that adhesion of spatters was suppressed and the bead surface became stable.

Thus, it is preferred that the first beam diameter $D_{BL}$ be larger than the second beam diameter $D_{IR}$. When the beam diameter ratio is adjusted to an appropriate value in accordance with at least the material of the workpiece W so that the first beam diameter $D_{BL}$ becomes larger than the second beam diameter $D_{IR}$, high-quality welding can be performed. It is to be noted that the beam diameter ratio is preferably about 2, but the beam diameter ratio is not limited to about 2 for all workpieces.

[Method of Adjusting Beam Diameter Ratio]

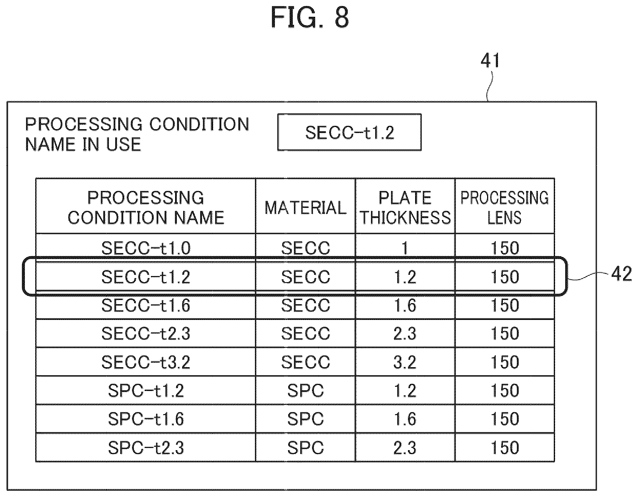

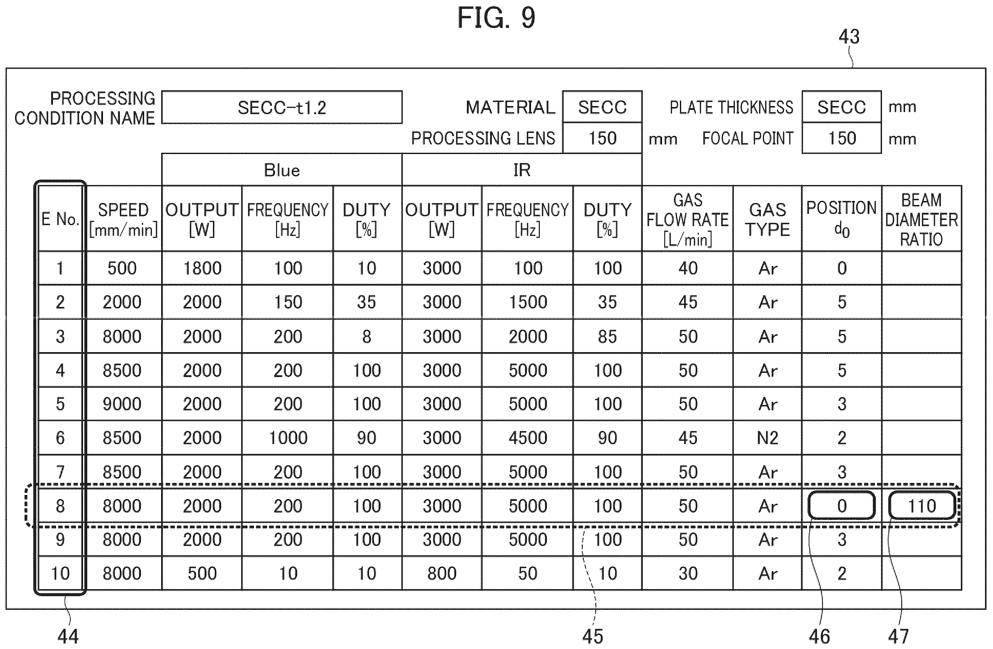

Next, a specific method of adjusting the beam diameter ratio is described with reference to FIG. 8 and FIG. 9. In the laser processing machine 101 of a first embodiment, the NC device 30 receives the instruction for setting the beam diameter ratio from the operator before the processing is started so as to control the collimating lens drive motor 23 being the beam diameter adjustment mechanism to adjust the beam diameter ratio.

FIG. 8 illustrates an example of a processing condition name selection image 41 to be displayed on the operation display unit 40 for the operator to input an instruction for selecting a processing condition name. For example, as illustrated in FIG. 8, the processing condition name selection image 41 displays a processing condition name associated with a combination of the material of the workpiece W to be processed, the plate thickness, and the thickness of the focusing lens 25 (processing lens). The processing condition name selection image 41 includes a processing condition name selection portion for the operator to select the processing condition name. The processing condition name selection portion can receive a request of selection of the processing condition name from the operator. The operator can select the processing condition name to input, to the NC device 30, an instruction to invoke a processing condition setting image 43 corresponding to the selected processing condition name. For example, as illustrated in FIG. 8, the operator selects a processing name selection portion 42 whose processing condition name is "SECC-t1.2" so as to input, to the NC device 30, the instruction to invoke the processing condition setting image 43 corresponding to the selected processing condition name "SECC-t1.2".

SECC in the processing condition name selection image 41 indicates an electrogalvanized steel sheet, and SPC indicates a cold-rolled steel sheet.

When the operator selects the processing name, that is, when the NC device 30 receives the instruction to invoke the processing condition setting image corresponding to the processing condition name, the NC device 30 displays the processing condition setting image 43 corresponding to the processing condition name on the operation display unit 40. FIG. 9 illustrates an example of the processing condition setting image 43 to be displayed on the operation display unit 40 for the operator to input the instruction for setting the beam diameter ratio. The processing condition setting image 43 includes a processing condition individual program number display portion 44 and a processing condition display portion, for example.

The processing condition individual program number display portion 44 displays "E No." which is the number of at least one or more processing programs corresponding to the processing condition name. The processing condition display portion displays setting items for each processing program. For example, as illustrated in FIG. 9, a processing condition display portion 45 displays the setting items for the processing program number "E No. 8". Examples of the setting items include "speed" which is a processing speed, "output", "frequency," and "duty" of the first laser beam, "output", "frequency," and "duty" of the second laser beam, "gas flow rate" and "gas type" of the assist gas supplied by the assist gas device, "position d0", and "beam diameter ratio". It is to be noted that, in a first embodiment, "position d0" means the distance d0 from the end of the second transmission fiber 21 to the second collimating lens 22.

The processing condition setting image 43 includes, in the processing condition display portion, a collimating lens position input portion and a beam diameter ratio display portion. For example, as illustrated in FIG. 9, a collimating lens position input portion 46 is included at a position of the setting item "position d0" of the processing condition display portion 45, and a beam diameter ratio display portion 47 is included at a position of the setting item "beam diameter ratio".

The processing condition setting image 43 receives, as the instruction for setting the beam diameter ratio, the distance d0 from the end of the second transmission fiber 21 to the second collimating lens 22 from the operator of the laser processing machine 101. Specifically, the processing condition setting image 43 receives, from the operator, a setting value of the "position d0" as the instruction for setting the beam diameter ratio. The operator can input the setting value of the "position d0" to the collimating lens position input portion 46 to input the instruction for setting the beam diameter ratio. The NC device 30 calculates the beam diameter ratio based on the received setting value of the "position d0", and displays the calculated value of the beam diameter ratio in the beam diameter ratio display portion 47.

Here, a method of calculating the beam diameter ratio based on the setting value of the "position d0" is described. In the laser processing machine 101 illustrated in FIG. 1, when w1 represents a beam diameter of the second laser beam at the end of the second transmission fiber 21, w2 represents a beam diameter of the second laser beam at the focal point, M2 represents a value indicating the quality of the laser beam, $\lambda_2$ represents a wavelength of the second laser beam, and C and D are the Formulas expressed in Formula (4), the light ray of the second laser beam can be expressed by Formula (6) below.

[Formula 6]

$$\left(\frac{w_2}{w_1}\right)^2 = \frac{1}{\left(\frac{\pi w_1{}^2}{M^2 \lambda_2}\right)^2 C^2 + D^2}$$

$$\dots \quad (6)$$

Further, when dw represents a beam diameter of the second laser beam at a beam waist position, $z_0$ represents a waist position of the second laser beam, z represents a freely-selected position along the optical axis direction of the second laser beam, and θ represents a beam divergence angle, a beam diameter d(z) of the second laser beam at the freely-selected position z along the optical axis direction of the second laser beam can be expressed by Formula (7) below.

[Formula 7]

$$d(z)^2 = dw^2 + (z - z_0)^2 \cdot \theta^2$$

$$\dots \quad (7)$$

By combining Formula (6) and Formula (7) described above, the beam diameter at a freely-selected position in the optical system for the second laser beam can be calculated. Thus, the second beam diameter $D_{IR}$ that is the beam diameter at the position at which the second laser beam irradiates the workpiece W can be calculated based on the setting value of the "position d0". The beam diameter ratio can be calculated from the relationship with respect to the first beam diameter $D_{BL}$ that is the beam diameter at the position at which the first laser beam irradiates the workpiece W. In this manner, the beam diameter ratio can be displayed in the beam diameter ratio display portion 47 based on the setting value of the "position d0".

The NC device 30 controls the collimating lens drive motor 23 in accordance with the instruction for setting the beam diameter ratio received by the operation display unit 40. Specifically, the NC device 30 drives, based on the setting value of the "position d0" received in the processing condition setting image 43, the collimating lens drive motor 23 to move the position of the second collimating lens 22. Then, the NC device 30 executes the processing program to execute processing of the workpiece W.

It is to be noted that the processing condition setting image 43 may receive, as the instruction for setting the beam diameter ratio, the distance from the end of the first transmission fiber 11 to the first collimating lens 12 as the setting value of the "position d0", to thereby calculate the beam diameter ratio. In this case, the NC device 30 drives, based on the setting value of the "position d0" received in the processing condition setting image 43, the collimating lens drive motor 23 to move the position of the first collimating lens 12. Further, the processing condition setting image 43 may receive, as the instruction for setting the beam diameter ratio, the distance from the end of the first transmission fiber 11 to the first collimating lens 12 and the distance from the end of the second transmission fiber 21 to the second collimating lens 22 as the setting value of the "position d0", to thereby calculate the beam diameter ratio. In this case, the NC device 30 drives, based on the setting value of the "position d0" received in the processing condition setting image 43, the collimating lens drive motor 23 to move the positions of the first and second collimating lenses 12 and 22.

That is, the processing condition setting image 43 may receive, as the instruction for setting the beam diameter ratio, at least one of the distance from the end of the first transmission fiber 11 to the first collimating lens 12 and the distance from the end of the second transmission fiber 21 to the second collimating lens 22, from the operator of the laser processing machine 101.

The beam diameter ratio may be set in accordance with a combination between the material of the workpiece W and the plate thickness. In this case, it is preferred that a plurality of plate thicknesses of the workpiece W be divided into two or more groups, and the beam diameter ratio be set in accordance with a combination between the material of the workpiece W and the group to which the plate thickness belongs.

[Actions and Effects]

As described above, the following actions and effects can be obtained according to a first embodiment.

The laser processing machine 101 includes the first laser oscillator 10, the first transmission fiber 11, the second laser oscillator 20, the second transmission fiber 21, the processing head 1, the beam diameter adjustment mechanism (collimating lens drive motor 23), and a controller (the NC device 30). The first laser oscillator 10 emits a first laser beam having a first wavelength. The first transmission fiber 11 transmits the first laser beam emitted by the first laser oscillator 10. The second laser oscillator 20 emits a second laser beam having a second wavelength different from the first wavelength. The second transmission fiber 21 transmits the second laser beam emitted by the second laser oscillator 20. The processing head 1 superimposes the first and second laser beams emitted from the ends of the first and second transmission fibers 11 and 21 on each other to irradiate the workpiece W with the superimposed first and second laser beams. The beam diameter adjustment mechanism adjusts at least one of the first beam diameter $D_{BL}$ and the second beam diameter $D_{IR}$ by operating an optical system for at least one of the first and second laser beams inside the processing head 1. The controller controls the beam diameter adjustment mechanism to adjust the ratio between the first beam diameter $D_{BL}$ and the second beam diameter $D_{IR}$ in accordance with at least the material of the workpiece W.

Further, the beam diameter adjustment mechanism is a mechanism configured to operate the optical system for the at least one of the first and second laser beams within a range of emission from the ends of the first and second transmission fibers 11 and 21 to superimposing of the first and second laser beams inside the processing head 1.

In this manner, the beam diameter ratio between the first and second laser beams at the position at which the first and second laser beams irradiate the workpiece W can be appropriately controlled in accordance with at least the material of the workpiece W. With the laser processing machine in which the first and second laser beams having different wavelengths are superimposed on each other, various workpieces W can be processed with high quality.

The laser processing machine 101 further includes an operation unit (operation display unit 40) configured to receive the instruction for setting the beam diameter ratio from the operator of the laser processing machine 101. The controller controls the beam diameter adjustment mechanism in accordance with an instruction received by the operation unit. In this manner, according to the laser processing machine 101, the beam diameter ratio between the first and second laser beams at the position at which the first and second laser beams irradiate the workpiece W can be designated or changed in accordance with the input performed by the operator. According to the laser processing machine 101, the beam diameter ratio can be set in accordance with at least the material of the workpiece W.

The processing head 1 includes the first collimating lens 12 into which the first laser beam emitted from the end of the first transmission fiber 11 enters, and the second collimating lens 22 into which the second laser beam emitted from the second transmission fiber enters. The beam diameter adjustment mechanism is a mechanism configured to drive at least one of the first and second collimating lenses to move in the optical axis directions of the first and second laser beams. With at least one of the first and second collimating lenses being driven to move in the optical axis directions of the first and second laser beams, the beam diameter ratio between the first and second laser beams at the position at which the first and second laser beams irradiate the workpiece W can be appropriately controlled in accordance with at least the material of the workpiece W.

The operation unit receives, as the instruction for setting the beam diameter ratio, at least one distance d0 of a first distance and a second distance from the operator. The first distance is a distance from the end of the first transmission fiber 11 to the first collimating lens 12, and the second distance is a distance from the end of the second transmission fiber 21 to the second collimating lens 22. In this manner, at least one of the first and second collimating lenses can be driven in the optical axis directions of the first and second laser beams in accordance with the input performed by the operator. The beam diameter ratio between the first and second laser beams at the position at which the first and second laser beams irradiate the workpiece W can be appropriately controlled in accordance with at least the material of the workpiece W, in accordance with the input performed by the operator.

The wavelength $\lambda_1$ of the first laser beam is 400 nm or more and 460 nm or less, for example, and the wavelength $\lambda_2$ of the second laser beam is 1,060 nm or more and 1,090 nm or less, for example. Blue laser is used as the first laser beam, and fiber laser is used as the second laser beam. With use of the advantage of the blue laser having a shortwavelength optical absorptance, there can be achieved stable heat input to a workpiece such as copper, which has been difficult to be processed with a conventional fiber laser alone. It is possible to suppress uneven melting, and suppress spatters and blowholes. Through combination of the advantage of the blue laser with the advantage of high depth and high-speed processing of the fiber laser, welding can be achieved while satisfying both of processing accuracy and processing speed.

The controller adjusts the beam diameter ratio so that the first beam diameter $D_{BL}$ becomes larger than the second beam diameter $D_{IR}$. The blue laser can form a molten pool on the outer side of the fiber laser. With an appropriate beam diameter ratio, the molten pool can be formed in a sufficient range to suppress destabilization of the keyhole of the fiber laser at the center portion. The metal flow in the processing direction can be stabilized, and spatters and blowholes can be suppressed.

Further, the beam diameter adjustment mechanism may be a mechanism configured to move at least one of the ends of the first and second transmission fibers 11 and 21 in the optical axis directions of the first and second laser beams. When at least one of the ends of the first and second transmission fibers 11 and 21 is moved in the optical axis directions of the first and second laser beams, the beam diameter ratio between the first and second laser beams at the position at which the first and second laser beams irradiate the workpiece W can be appropriately controlled in accordance with at least the material of the workpiece W.

[Second Embodiment]

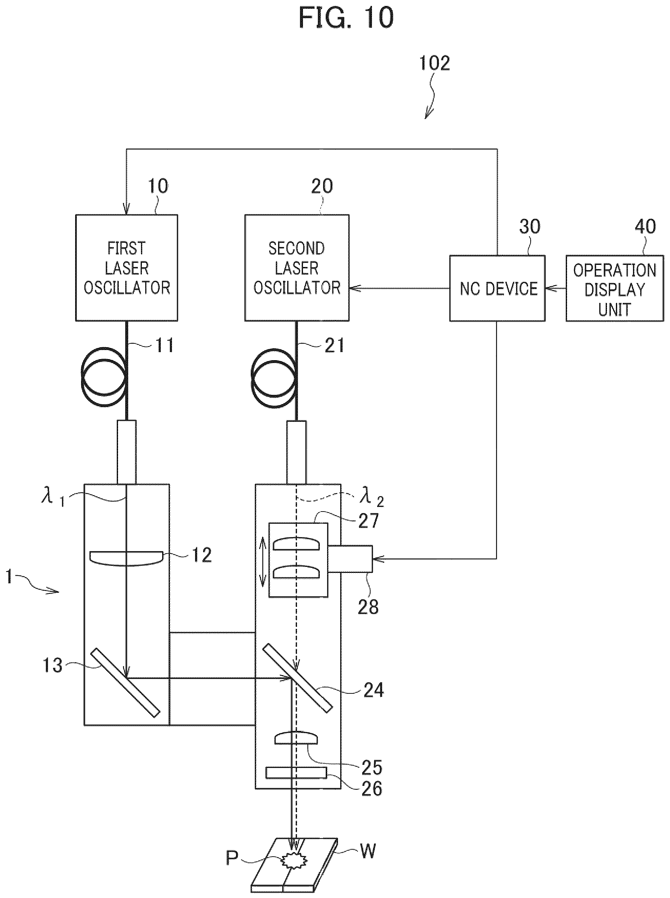

In a first embodiment, as an example of the beam diameter adjustment mechanism, a mechanism configured to cause the collimating lens drive motor 23 to drive at least one of the first and second collimating lenses 12 and 22 in the optical axis directions of the first and second laser beams is included. The beam diameter adjustment mechanism may be a zoom mechanism configured to expand or reduce at least one of the first beam diameter $D_{BL}$ and the second beam diameter $D_{IR}$. FIG. 10 is a schematic configuration diagram of a laser processing machine 102 according to a second embodiment including a zoom mechanism 27. The laser processing machine 102 of FIG. 10 includes the zoom mechanism 27 in place of the second collimating lens 22 and the collimating lens drive motor 23 of FIG. 1. In FIG. 10, the same components as those of FIG. 1 are denoted by the same reference symbols, and description thereof is omitted.

For example, the zoom mechanism 27 is disposed between the end of the second transmission fiber 21 and the dichroic mirror 24. The zoom mechanism 27 includes two or more lenses, and a lens drive motor 28 configured to move a lens in the optical axis direction of the second laser beam. The optical axis of the lens of the zoom mechanism 27 matches the optical axis of the focusing lens 25. In FIG. 10, the lens of the zoom mechanism 27 is configured of two convex lenses, but the number of lenses is not limited to two. Further, the lens of the zoom mechanism 27 may be configured of a convex lens, a concave lens, a plano-convex lens, a plano-concave lens, or a concave-convex lens, or may be configured of a spherical lens having a curved spherical surface or an aspherical lens having an aspherical curved surface. The detailed lens configuration of the zoom mechanism 27 is not particularly limited.

The lens drive motor 28 is controlled by the NC device 30. The lens drive motor 28 drives the lens of the zoom mechanism 27 along the optical axis direction of the second laser beam so as to operate the optical system for the second laser beam inside the processing head 1, to thereby expand and reduce the second beam diameter $D_{IR}$. The method of expanding and reducing the beam diameter by the zoom mechanism 27 is a known technology, and hence description thereof is omitted.

It is to be noted that the zoom mechanism 27 may be disposed between the end of the first transmission fiber 11 and the bend mirror 13 instead of being disposed between the end of the second transmission fiber 21 and the dichroic mirror 24. In this case, the lens drive motor 28 drives the lens of the zoom mechanism 27 in the optical axis direction of the first laser beam to expand or reduce the first beam diameter $D_{BL}$. Further, the zoom mechanism 27 may be disposed between the end of the first transmission fiber 11 and the bend mirror 13 and between the end of the second transmission fiber 21 and the dichroic mirror 24. In this case, the lens drive motor 28 drives the lens of the zoom mechanism 27 in the optical axis directions of the first and second laser beams to expand or reduce the first and second beam diameters $D_{BL}$ and $D_{IR}$.

That is, the zoom mechanism 27 is only required to be a mechanism configured to expand or reduce at least one of the first and second beam diameters. With the at least one of the first and second beam diameters $D_{BL}$ and $D_{IR}$ being expanded or shrunk, the zoom mechanism 27 can adjust the beam diameter ratio in accordance with the material of the workpiece W by operating the optical system for at least one of the first and second laser beams inside the processing head 1. In this manner, in the laser processing machine in which the first and second laser beams having different wavelengths are subjected to wavelength superposition, various workpieces W can be processed with high quality.

[Third Embodiment]

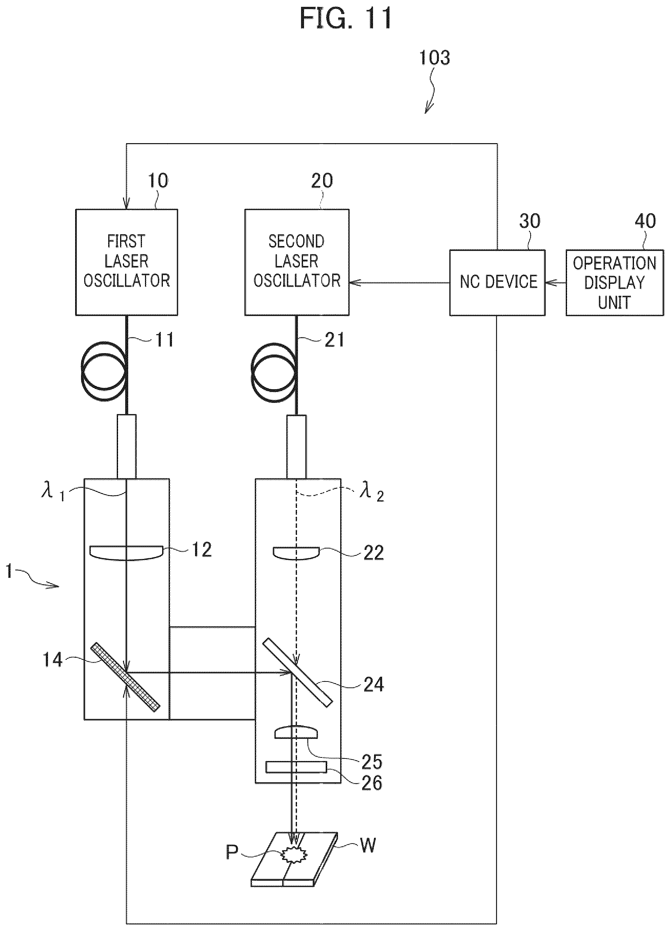

The beam diameter adjustment mechanism may be a mechanism including a curvature variable mirror on the optical axis of at least one of the first and second laser beams. For example, FIG. 11 is a schematic configuration diagram of a laser processing machine 103 according to a third embodiment including a curvature variable mirror 14 on the optical axis of the first laser beam. The laser processing machine 103 of FIG. 11 includes no collimating lens drive motor 23 of FIG. 1, and includes the curvature variable mirror 14 in place of the bend mirror 13 of FIG. 1. In FIG. 11, the same components as those of FIG. 1 are denoted by the same reference symbols, and description thereof is omitted.

For example, the curvature variable mirror 14 is disposed on the optical axis of the first laser beam, and reflects the first laser beam emitted from the first collimating lens 12 to cause the first laser beam to enter the dichroic mirror 24. The curvature variable mirror 14 is provided so that the curvature of the reflecting surface can be freely changed and adjusted. Methods of controlling the curvature variable mirror 14 include an electric piezoactuator system, a pneumatic control system, a liquidpressure control system, and the like, and the curvature variable mirror 14 is controlled by the NC device 30. The curvature variable mirror 14 adjusts the beam diameter of the first laser beam entering the dichroic mirror 24 by adjusting the curvature of the reflecting surface. That is, the curvature variable mirror 14 can adjust the beam diameter of the first laser beam reflected by the dichroic mirror 24 to enter the focusing lens 25. The adjustment of the beam diameter performed by the curvature variable mirror 14 is a known technology, and hence description thereof is omitted. Through adjustment of the beam diameter of the first laser beam entering the focusing lens 25, the beam diameter ratio between the first and second beam diameters $D_{BL}$ and $D_{IR}$ at the position at which the first and second laser beams irradiate the workpiece W can be adjusted.

It is to be noted that the curvature variable mirror may be disposed on the optical axis of the second laser beam instead of being disposed on the optical axis of the first laser beam. For example, the laser processing machine 103 may have a configuration obtained exchanging the first laser oscillator 10, the first transmission fiber 11, and the first collimating lens 12 of FIG. 11 with the second laser oscillator 20, the second transmission fiber 21, and the second collimating lens 22. In this case, the curvature variable mirror 14 adjusts the beam diameter of the second laser beam entering the dichroic mirror 24 by adjusting the curvature of the reflecting surface. That is, the curvature variable mirror 14 can adjust the beam diameter of the second laser beam reflected by the dichroic mirror 24 to enter the focusing lens 25.

[Fourth Embodiment]

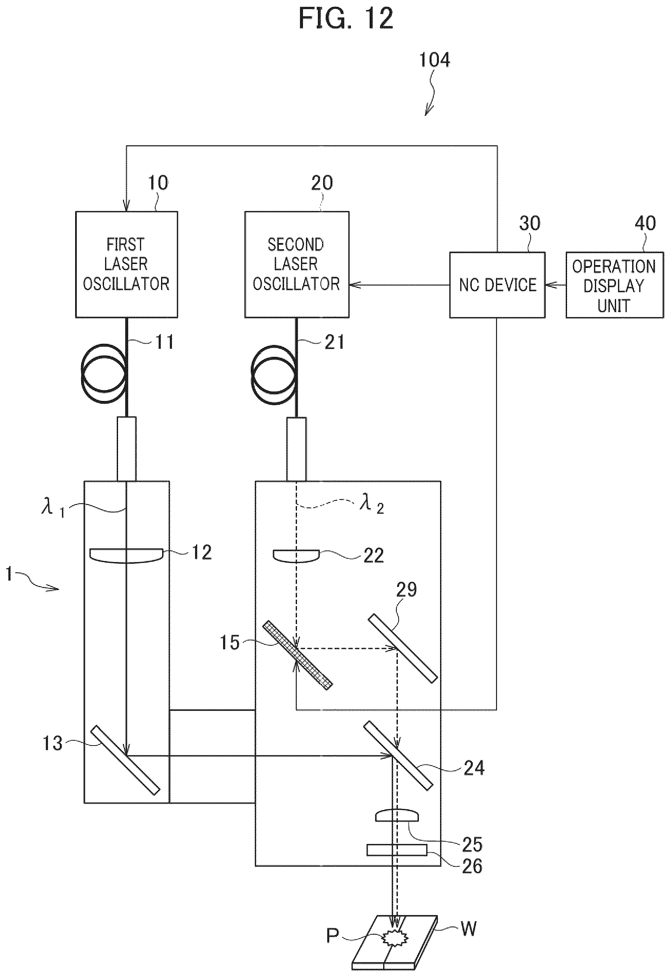

With a configuration as illustrated in FIG. 12, the curvature variable mirror may be disposed on the optical axis of the second laser beam. FIG. 12 is a schematic configuration diagram of a laser processing machine 104 according to a fourth embodiment including a curvature variable mirror 15 on the optical axis of the second laser beam. The laser processing machine 104 of FIG. 12 includes no collimating lens drive motor 23 of FIG. 1, and includes the curvature variable mirror 15 and a bend mirror 29 between the second collimating lens 22 and the dichroic mirror 24 on the optical axis of the second laser beam. The characteristic of the curvature variable mirror 15 is similar to that of the curvature variable mirror 14 of FIG. 11, and the curvature variable mirror 15 is controlled by the NC device 30. In FIG. 12, the same components as those of FIG. 1 are denoted by the same reference symbols, and description thereof is omitted.

In FIG. 12, the curvature variable mirror 15 is disposed on the optical axis of the second laser beam emitted from the second collimating lens 22, and reflects the second laser beam emitted from the second collimating lens 22 to cause the second laser beam to enter the bend mirror 29. The curvature variable mirror 15 adjusts the beam diameter of the second laser beam entering the bend mirror 29 by adjusting the curvature of the reflecting surface. The bend mirror 29 reflects the second laser beam whose beam diameter is adjusted by the curvature variable mirror 15 to cause the second laser beam to enter the dichroic mirror 24. The dichroic mirror 24 reflects the first laser beam entering the dichroic mirror 24 from the bend mirror 13, and transmits the second laser beam entering the dichroic mirror 24 from the bend mirror 29.

That is, in FIG. 12, the curvature variable mirror 15 can adjust the beam diameter of the second laser beam that passes through the dichroic mirror 24 and enters the focusing lens 25 by adjusting the curvature of the reflecting surface. Through adjustment of the beam diameter of the second laser beam entering the focusing lens 25, the beam diameter ratio between the first and second beam diameters $D_{BL}$ and $D_{IR}$ at the position at which the first and second laser beams irradiate the workpiece W can be adjusted.

Moreover, the curvature variable mirror may be disposed on the optical axis of the first laser beam and disposed on the optical axis of the second laser beam. In this case, for example, the laser processing machine 104 may include the curvature variable mirror 14 in place of the bend mirror 13 of FIG. 12. In this case, the curvature variable mirrors 14 and 15 can adjust the beam diameters of the first and second laser beams entering the focusing lens 25. Through adjustment of the beam diameters of the first and second laser beams entering the focusing lens 25, the beam diameter ratio between the first and second beam diameters $D_{BL}$ and $D_{IR}$ at the position at which the first and second laser beams irradiate the workpiece W can be adjusted.

That is, the beam diameter adjustment mechanism is only required to be a mechanism in which at least one of a first mirror and a second mirror is a curvature variable mirror. The first mirror is disposed between the first collimating lens 12 and the dichroic mirror 24 on the optical axis of the first laser beam, and the second mirror is disposed between the second collimating lens 22 and the dichroic mirror 24 on the optical axis of the second laser beam. When at least one of the first and second mirrors is the curvature variable mirror, the beam diameter ratio can be adjusted in accordance with at least the material of the workpiece W. In this manner, in the laser processing machine in which the first and second laser beams having different wavelengths are subjected to wavelength superposition, various workpieces can be processed with high quality.

[Modification Example]

A modification example of first to fourth embodiments is described. In first to fourth embodiments, the NC device 30 controls the first and second laser oscillators 10 and 20 so that the first and second laser beams irradiate the workpiece W at the same time. By the way, it is known that, when copper is in a non-molten state, the optical absorptance of blue laser with respect to copper is higher than the optical absorptance of infrared laser with respect to copper. Thus, it is possible to preheat copper with high thermal efficiency by the blue laser from when the preheating of copper is started until copper is melted. Further, the optical absorptance of the infrared laser increases as the temperature of copper rises. Thus, while the temperature of copper further rises after the melting of copper is started, the infrared laser can weld copper with high thermal efficiency as well by applying the infrared laser with high output.

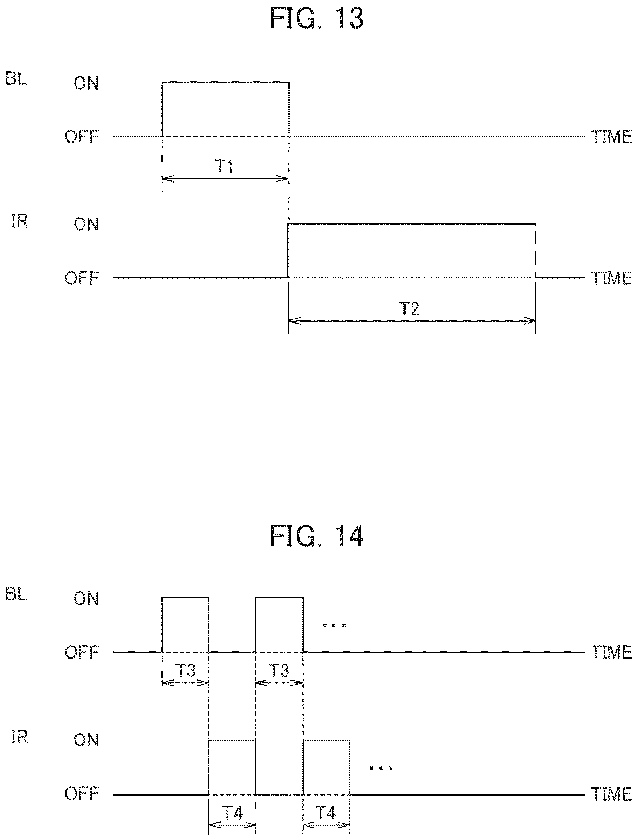

Accordingly, in first to fourth embodiments, the NC device 30 may control the first and second laser oscillators 10 and 20 as follows. As illustrated in FIG. 13, for example, after the first laser beam (blue laser BL) is emitted for a first predetermined time period T1 until the workpiece W melts, the emission of the first laser beam is stopped, and after the stop of the first laser beam, the second laser beam (fiber laser IR) is emitted for a second predetermined time period T2. This method of emitting the laser beams is applicable to both of a case of performing spot welding and a case of performing continuous welding.

When spot welding is performed at the processing point P of the workpiece W, for example, the NC device 30 turns on the emission of the first laser beam at the processing point P of the workpiece W to start preheating of the workpiece W. After the first predetermined time period T1 elapses and the melting of the workpiece W starts, the NC device 30 turns off the emission of the first laser beam. The NC device 30 turns on the emission of the second laser beam at the timing at which the emission of the first laser beam is turned off. The NC device 30 welds and processes the workpiece W preheated by the first laser beam while the emission of the second laser beam is turned on. Then, after the second predetermined time period T2 elapses and the welding by the second laser beam is completed, the NC device 30 turns off the emission of the second laser beam and completes the welding processing. The first predetermined time period T1 and the second predetermined time period T2 may be the same time period, or may be different time periods.

In this manner, the NC device 30 can process the workpiece W with higher efficiency without applying the first and second laser beams at the same time.

Further, when continuous welding is performed with the processing point P of the workpiece W being set as a starting point, for example, the NC device 30 turns on the emission of the first laser beam to start the preheating of the workpiece W while the processing head 1 is stopped at the processing point P of the workpiece W. After the first predetermined time period T1 elapses and the melting of the workpiece W starts, the NC device 30 turns off the emission of the first laser beam. The heat applied by the first laser beam and absorbed in the workpiece W is transmitted to the inside of the workpiece W through thermal conduction. It is to be noted that the first predetermined time period T1 can be set to, for example, 1 ms or less. When the first predetermined time period T1 is 1 ms or less, it can be said that the first predetermined time period T1 is sufficiently short with respect to the moving speed of the processing head 1. When the first predetermined time period T1 is sufficiently short with respect to the moving speed of the processing head 1, the NC device 30 may turn on the emission of the first laser beam while moving the processing head 1 from the processing point P of the workpiece W along the processing path, and, after the first predetermined time period T1 elapses, the NC device 30 may turn off the emission of the first laser beam.

The NC device 30 turns on the emission of the second laser beam at the timing at which the emission of the first laser beam is turned off. The NC device 30 welds and processes the processing path while moving the processing head along the processing path, while the emission of the second laser beam is turned on. After that, after the second predetermined time period T2 elapses and the welding of the processing path by the second laser beam is completed, the NC device 30 turns off the emission of the second laser beam and completes the welding processing.

In this manner, the NC device 30 can process the workpiece W with higher efficiency without applying the first and second laser beams at the same time. It is to be noted that the NC device 30 may control the first and second laser oscillators 10 and 20 to switch, after the second laser beam is turned on, the second laser beam to the first laser beam to emit the first laser beam in the middle of the processing path, and then switch the first laser beam to the second laser beam again.

It is to be noted that, in FIG. 13, after turning off the emission of the second laser beam, the NC device 30 may turn on the emission of the first laser beam again to perform post-heating processing of the processing path. With the post-heating processing being performed with use of the first laser beam, the workpiece W can be processed with high quality and high efficiency.

Further, in first to fourth embodiments, the NC device 30 may control the first and second laser oscillators 10 and 20 so that, as illustrated in FIG. 14, for example, the first laser beam and the second laser beam are alternately emitted. The first laser beam is emitted for a third predetermined time period T3 and the second laser beam is emitted for a fourth predetermined time period T4. This method of emitting the laser beams is applicable to both of the case of performing spot welding and the case of performing continuous welding, and is particularly effective in the case of performing continuous

14

welding.

When continuous welding is performed, for example, the NC device 30 welds and processes the processing path while alternately repeating, on the processing path of the workpiece W, the preheating of the processing path by the first laser beam for the third predetermined time period T3 and the welding of the processing path by the second laser beam for the fourth predetermined time period T4. The third predetermined time period T3 and the fourth predetermined time period T4 may be the same time period, or may be different time periods. It is to be noted that, in FIG. 14, the NC device 30 may perform the post-heating processing of the processing path when the emission of the second laser beam is turned off and the emission of the first laser beam is turned on again. In this manner, the workpiece W can be processed with higher quality and higher efficiency without applying the first and second laser beams at the same time.

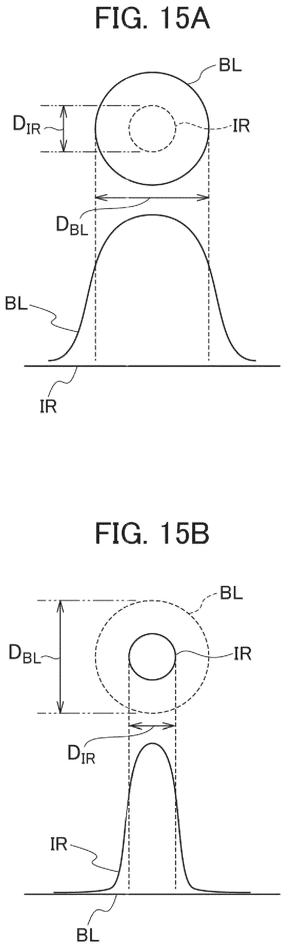

FIG. 15A and FIG. 15B illustrate examples of the beam diameters and the beam profiles of the first and second laser beams at the time when the first laser beam and the second laser beam are selectively emitted in FIG. 13 or FIG. 14. FIG. 15A illustrates a state in which the first laser beam irradiates the workpiece W, and FIG. 15B illustrates a state in which the second laser beam irradiates the workpiece W. FIG. 15A and FIG. 15B illustrate the beam diameter on the upper side and the beam profile on the lower side. The beam profile refers to a characteristic indicating a relationship between a distance from a center of the beam and an intensity of the beam of each of the first and second laser beams.

As illustrated in FIG. 15A, the beam diameter of the first laser beam is adjusted so that the beam diameter at the position at which the first laser beam irradiates the workpiece W becomes the first beam diameter $D_{BL}$. As illustrated in FIG. 15B, the beam diameter of the second laser beam is adjusted so that the beam diameter at the position at which the second laser beam irradiates the workpiece W becomes the second beam diameter $D_{IR}$. It is to be noted that the beam profiles of the first and second laser beams typically have a Gaussian shape as illustrated in FIG. 15A and FIG. 15B. The beam profiles of the first and second laser beams may have a top hat shape (flat top shape) or a ring shape obtained by shaping the Gaussian-shaped beam profile.

The present invention is not limited to the embodiments described above, and various modifications can be made thereto without departing from the scope of the present invention as defined in the appended claims.

**Claims**

**1.** A laser processing machine (101-104) comprising:

a first laser oscillator (10) configured to emit a first laser beam having a first wavelength ($\lambda_1$);
a first transmission fiber (11) configured to transmit the first laser beam emitted by the first laser oscillator (10);
a second laser oscillator (20) configured to emit a second laser beam having a second wavelength ($\lambda_2$) different from the first wavelength ($\lambda_1$);
a second transmission fiber (21) configured to transmit the second laser beam emitted by the second laser oscillator (20);
a processing head (1) configured to irradiate a workpiece (W) with the first and second laser beams emitted from ends of the first and second transmission fibers; and
a beam diameter adjustment mechanism (23) configured to adjust at least one of a first beam diameter ($D_{BL}$) and a second beam diameter ($D_{IR}$) by operating an optical system for at least one of the first and second laser beams inside the processing head (1), the first beam diameter ($D_{BL}$) being a beam diameter of the first laser beam at a position at which the first laser beam irradiates the workpiece (W), the second beam diameter ($D_{IR}$) being a beam diameter of the second laser beam at a position at which the second laser beam irradiates the workpiece (W); and,

**characterized in that:**
the laser processing machine (101-104) further comprises:
a control device (30) configured to control the beam diameter adjustment mechanism (23) to adjust a ratio between the first beam diameter ($D_{BL}$) and the second beam diameter ($D_{IR}$) in accordance with at least a material of the workpiece (W).

**2.** The laser processing machine (101-104) according to claim 1, wherein

the control device (30) is configured to control the first and second laser oscillators (10, 20) so that the first and second laser beams irradiate the workpiece (W) at the same time, and
the processing head (1) is configured to superimpose the first and second laser beams on each other inside the processing head (1) to irradiate the workpiece (W) with the superimposed first and second laser beams.

**3.** The laser processing machine (101-104) according to claim 1, wherein the control device (30) is configured to control the first and second laser oscillators (10, 20) so that, after the first laser beam is emitted for a first predetermined time period, emission of the first laser beam is stopped and, after the emission of the first laser beam is stopped, the second laser beam is emitted for a second predetermined time period.

4. The laser processing machine (101-104) according to claim 1, wherein the control device (30) is configured to control the first and second laser oscillators (10, 20) so that the first laser beam and the second laser beam are alternately emitted, the first laser beam being emitted for a third predetermined time period, the second laser beam being emitted for a fourth predetermined time period.

5. The laser processing machine (101-104) according to any one of claims 1 to 4, wherein the beam diameter adjustment mechanism (23) is a mechanism configured to operate the optical system for the at least one of the first and second laser beams within a range of emission from the ends of the first and second transmission fibers to superimposing of the first and second laser beams inside the processing head (1).

6. The laser processing machine (101-104) according to any one of claims 1 to 5, further comprising an operation unit (40) configured to receive an instruction for setting the ratio from an operator of the laser processing machine (101-104), wherein
the control device (30) is configured to control the beam diameter adjustment mechanism (23) in accordance with the instruction received by the operation unit (40).

7. The laser processing machine (101-104) according to any one of claims 1 to 6, wherein

   the processing head (1) includes:

      a first collimating lens (12) into which the first laser beam emitted from the end of the first transmission fiber (11) enters; and
      a second collimating lens (22) into which the second laser beam emitted from the second transmission fiber enters, and

      the beam diameter adjustment mechanism (23) is a mechanism configured to drive at least one of the first and second collimating lenses (12, 22) to move in optical axis directions of the first and second laser beams.

8. The laser processing machine (101-104) according to claim 7 when dependent on claim 6, wherein the operation unit (40) is configured to receive, from the operator, at least one distance of a first distance and a second distance as the instruction for setting the ratio, the first distance being a distance from the end of the first transmission fiber (11) to the first collimating lens, the second distance being a distance from the end of the second transmission fiber to the second collimating lens (22).

9. The laser processing machine (102) according to any one of claims 1 to 6, wherein the beam diameter adjustment mechanism (23) is a zoom mechanism (27) configured to expand or reduce at least one of the first and second beam diameters ($D_{BL}$, $D_{IR}$).

10. The laser processing machine (103, 104) according to any one of claims 1 to 6, wherein the beam diameter adjustment mechanism (23) is a mechanism including a curvature variable mirror (14) on an optical axis of at least one of the first and second laser beams.

11. The laser processing machine (101-104) according to any one of claims 1 to 6, wherein the beam diameter adjustment mechanism (23) is a mechanism configured to move at least one of the ends of the first and second transmission fibers in optical axis directions of the first and second laser beams.

12. The laser processing machine (101-104) according to any one of claims 1 to 11, wherein

   the first wavelength is 400 nm or more and 460 nm or less, and
   the second wavelength is 1,060 nm or more and 1,090 nm or less.

13. The laser processing machine (101-104) according to claim 12, wherein the control device (30) is configured to adjust the ratio so that the first beam diameter ($D_{BL}$) becomes larger than the second beam diameter ($D_{IR}$).

**14.** A laser processing method comprising:

adjusting at least one of a first beam diameter ($D_{BL}$) and a second beam diameter ($D_{IR}$) by operating an optical system for at least one of a first laser beam and a second laser beam, the first laser beam being emitted by a first laser oscillator (10) and having a first wavelength, the second laser beam being emitted by a second laser oscillator (20) and having a second wavelength different from the first wavelength, the first beam diameter ($D_{BL}$) being a beam diameter of the first laser beam at a position at which the first laser beam irradiates a workpiece (W), the second beam diameter ($D_{IR}$) being a beam diameter of the second laser beam at a position at which the second laser beam irradiates the workpiece (W); and

**characterized in that:**

the method further comprises:

adjusting by using a control device (30) a ratio between the first beam diameter ($D_{BL}$) and the second beam diameter ($D_{IR}$) in accordance with at least a material of the workpiece (W).

**Patentansprüche**

**1.** Laserbearbeitungsmaschine (101-104), umfassend:

einen ersten Laseroszillator (10), ausgebildet zum Ausstrahlen eines ersten Laserstrahls mit einer ersten Wellenlänge ($\lambda_1$);

eine erste Übertragungsfaser (11), ausgebildet zum Übertragen des vom ersten Laseroszillator (10) ausgestrahlten ersten Laserstrahls;

einen zweiten Laseroszillator (20), ausgebildet zum Ausstrahlen eines zweiten Laserstrahls mit einer zweiten Wellenlänge ($\lambda_2$), die sich von der ersten Wellenlänge ($\lambda_1$) unterscheidet;

eine zweite Übertragungsfaser (21), ausgebildet zum Übertragen des vom zweiten Laseroszillator (20) ausgestrahlten zweiten Laserstrahls;

einen Bearbeitungskopf (1), ausgebildet zum Bestrahlen eines Werkstücks (W) mit dem ersten und zweiten Laserstrahl, die von Enden der ersten und der zweiten Übertragungsfaser ausgestrahlt werden; und

einen Strahldurchmesser-Anpassmechanismus (23), ausgebildet zum Anpassen eines ersten Strahldurchmessers ($D_{BL}$) oder/und eines zweiten Strahldurchmessers ($D_{IR}$) durch Betreiben eines optischen Systems für wenigstens einen von erstem und zweitem Laserstrahl innerhalb des Bearbeitungskopfes (1), wobei der erste Strahldurchmesser ($D_{BL}$) ein Strahldurchmesser des ersten Laserstrahls an einer Position ist, an welcher der erste Laserstrahl das Werkstück (W) bestrahlt und wobei der zweite Strahldurchmesser ($D_{IR}$) ein Strahldurchmesser des zweiten Laserstrahls an einer Position ist, an welcher der zweite Laserstrahl das Werkstück (W) bestrahlt; und

**dadurch gekennzeichnet, dass**:

die Laserbearbeitungsmaschine (101-104) ferner umfasst:

eine Steuervorrichtung (30), ausgebildet zum Steuern des Strahldurchmesser-Anpassmechanismus (23) zum Anpassen eines Verhältnisses zwischen dem ersten Strahldurchmesser ($D_{BL}$) und dem zweiten Strahldurchmesser ($D_{IR}$) gemäß wenigstens einem Material des Werkstücks (W).

**2.** Laserbearbeitungsmaschine (101-104) nach Anspruch 1, wobei

die Steuervorrichtung (30) zum Steuern des ersten und zweiten Laseroszillator (10, 20) so ausgebildet ist, dass der erste und zweite Laserstrahl das Werkstück (W) gleichzeitig bestrahlen, und

der Bearbeitungskopf (1) zum Übereinanderlegen des ersten und zweiten Laserstrahls innerhalb des Bearbeitungskopfes (1) ausgebildet ist, um das Werkstück (W) mit dem übereinandergelegten ersten und zweiten Laserstrahl zu bestrahlen.

**3.** Laserbearbeitungsmaschine (101-104) nach Anspruch 1, wobei die Steuervorrichtung (30) zum Steuern des ersten und zweiten Laseroszillators (10, 20) ausgebildet ist, so dass, nachdem der erste Laserstrahl für eine erste vorbestimmte Zeitdauer ausgestrahlt wurde, das Ausstrahlen des ersten Laserstrahls gestoppt wird und, nachdem das Ausstrahlen des ersten Laserstrahls gestoppt wurde, der zweite Laserstrahl für eine zweite vorbestimmte Zeitdauer ausgestrahlt wird.

**4.** Laserbearbeitungsmaschine (101-104) nach Anspruch 1, wobei die Steuervorrichtung (30) zum Steuern des ersten und zweiten Laseroszillators (10, 20) ausgebildet ist, so dass der erste Laserstrahl und der zweite Laserstrahl abwechselnd ausgestrahlt werden, wobei der erste Laserstrahl für eine dritte vorbestimmte Zeitdauer ausgestrahlt wird und wobei der zweite Laserstrahl für eine vierte vorbestimmte Zeitdauer ausgestrahlt wird.

5. Laserbearbeitungsmaschine (101-104) nach einem der Ansprüche 1 bis 4, wobei der Strahldurchmesser-Anpassmechanismus (23) ein Mechanismus ist, der für das Betreiben des optischen Systems für den wenigstens einen von erstem und zweitem Laserstrahl innerhalb eines Ausstrahlungsbereichs von den Enden der ersten und zweiten Übertragungsfaser zum Übereinanderlegen des ersten und zweiten Laserstrahls innerhalb des Bearbeitungskopfes (1) ausgebildet ist.

6. Laserbearbeitungsmaschine (101-104) nach einem der Ansprüche 1 bis 5, ferner umfassend eine Betriebseinheit (40), ausgebildet zum Empfangen einer Anweisung zum Festlegen des Verhältnisses von einem Bediener der Laserbearbeitungsmaschine (101-104), wobei die Steuervorrichtung (30) zum Steuern des Strahldurchmesser-Anpassmechanismus (23) gemäß der von der Betriebseinheit (40) empfangenen Anweisung ausgebildet ist.

7. Laserbearbeitungsmaschine (101-104) nach einem der Ansprüche 1 bis 6, wobei der Bearbeitungskopf (1) umfasst:

   eine erste Kollimatorlinse (12), in die der vom Ende der ersten Übertragungsfaser (11) ausgestrahlte erste Laserstrahl eintritt; und
   eine zweite Kollimatorlinse (22), in die der von der zweiten Übertragungsfaser ausgestrahlte zweite Laserstrahl eintritt, und
   der Strahldurchmesser-Anpassmechanismus (23) ein Mechanismus ist, der zum Antreiben der ersten oder/und zweiten Kollimatorlinse (12, 22) zum Bewegen in optischen Achsrichtungen des ersten und zweiten Laserstrahls ausgebildet ist.

8. Laserbearbeitungsmaschine (101-104) nach Anspruch 7, wenn von Anspruch 6 abhängig,
   wobei die Betriebseinheit (40) zum Empfangen von wenigstens einem Abstand eines ersten Abstands und eines zweiten Abstands als die Anweisung zum Festlegen des Verhältnisses vom Bediener ausgebildet ist, wobei der erste Abstand ein Abstand vom Ende der ersten Übertragungsfaser (11) zur ersten Kollimatorlinse ist und der zweite Abstand ein Abstand vom Ende der ersten Übertragungsfaser zur zweiten Kollimatorlinse (22) ist.

9. Laserbearbeitungsmaschine (102) nach einem der Ansprüche 1 bis 6, wobei der Strahldurchmesser-Anpassmechanismus (23) ein Zoommechanismus (27) ist, der zum Vergrößern oder Verkleinern von wenigstens einem von erstem zweitem Strahldurchmesser ($D_{BL}$, $D_{IR}$) ausgebildet ist.

10. Laserbearbeitungsmaschine (103, 104) nach einem der Ansprüche 1 bis 6, wobei der Strahldurchmesser-Anpassmechanismus (23) ein Mechanismus ist, der einen krümmungsvariablen Spiegel (14) auf einer optischen Achse von wenigstens einem von erstem und zweitem Laserstrahl umfasst.

11. Laserbearbeitungsmaschine (101-104) nach einem der Ansprüche 1 bis 6, wobei der Strahldurchmesser-Anpassmechanismus (23) ein Mechanismus ist, der zum Bewegen von wenigstens einem der Enden der ersten und zweiten Übertragungsfaser in optischen Achsrichtungen des ersten und zweiten Laserstrahls ausgebildet ist.

12. Laserbearbeitungsmaschine (101-104) nach einem der Ansprüche 1 bis 11, wobei

   die erste Wellenlänge 400 nm oder mehr und 460 nm oder weniger beträgt, und
   die zweite Wellenlänge 1.060 nm oder mehr und 1.090 nm oder weniger beträgt.

13. Laserbearbeitungsmaschine (101-104) nach Anspruch 12, wobei die Steuervorrichtung (30) zum Anpassen des Verhältnisses ausgebildet ist, so dass der erste Strahldurchmesser ($D_{BL}$) größer wird als der zweite Strahldurchmesser ($D_{IR}$).

14. Laserbearbeitungsverfahren, umfassend:

   Anpassen von wenigstens einem eines ersten Strahldurchmessers ($D_{BL}$) und eines zweiten Strahldurchmessers ($D_{IR}$) durch Betreiben eines optischen Systems für wenigstens einen eines ersten Laserstrahls und eines zweiten Laserstrahls, wobei der erste Laserstrahl von einem ersten Laseroszillator (10) ausgestrahlt wird und eine erste Wellenlänge aufweist und der zweite Laserstrahl von einem zweiten Laseroszillator (20) ausgestrahlt wird und eine zweite Wellenlänge aufweist, die sich von der ersten Wellenlänge unterscheidet, wobei der erste Strahldurchmesser ($D_{BL}$) ein Strahldurchmesser des ersten Laserstrahls an einer Position ist, an welcher der erste Laserstrahl ein Werkstück (W) bestrahlt und der zweite Strahldurchmesser ($D_{IR}$) ein Strahldurchmesser des zweiten Laserstrahls an einer Position ist, an welcher der zweite Laserstrahl das Werkstück (W) bestrahlt; und
**dadurch gekennzeichnet, dass**:

das Verfahren ferner umfasst:

Anpassen eines Verhältnisses zwischen dem ersten Strahldurchmesser ($D_{BL}$) und dem zweiten Strahldurchmesser ($D_{IR}$) gemäß wenigstens einem Material des Werkstücks (W) unter Verwendung einer Steuervorrichtung (30).

**Revendications**

1. Machine de traitement laser (101-104) comprenant :

   un premier oscillateur laser (10) conçu pour émettre un premier faisceau laser ayant une première longueur d'onde ($\lambda_1$) ;
   une première fibre de transmission (11) conçue pour transmettre le premier faisceau laser émis par le premier oscillateur laser (10) ;
   un second oscillateur laser (20) conçu pour émettre un second faisceau laser ayant une seconde longueur d'onde ($\lambda_2$) différente de la première longueur d'onde ($\lambda_1$) ;
   une seconde fibre de transmission (21) conçue pour transmettre le second faisceau laser émis par le second oscillateur laser (20) ;
   une tête de traitement (1) conçue pour irradier une pièce (W) avec les premier et second faisceaux laser émis à partir d'extrémités des première et seconde fibres de transmission ; et
   un mécanisme de réglage de diamètre de faisceau (23) conçu pour régler au moins l'un d'un diamètre de premier faisceau ($D_{BL}$) et d'un diamètre de second faisceau ($D_{IR}$) par l'actionnement d'un système optique pour au moins l'un des premier et second faisceaux laser à l'intérieur de la tête de traitement (1), le diamètre de premier faisceau ($D_{BL}$) étant un diamètre de faisceau du premier faisceau laser au niveau d'une position à laquelle le premier faisceau laser irradie la pièce (W), le diamètre de second faisceau ($D_{IR}$) étant un diamètre de faisceau du second faisceau laser au niveau d'une position à laquelle le second faisceau laser irradie la pièce (W) ; et,
   **caractérisée en ce que** :
   la machine de traitement laser (101-104) comprend en outre :
   un dispositif de commande (30) conçu pour commander le mécanisme de réglage de diamètre de faisceau (23) pour régler un rapport entre le diamètre de premier faisceau ($D_{BL}$) et le diamètre de second faisceau ($D_{IR}$) en fonction d'au moins un matériau de la pièce (W).

2. Machine de traitement laser (101-104) selon la revendication 1, dans laquelle

   le dispositif de commande (30) est conçu pour commander les premier et second oscillateurs laser (10, 20) de sorte que les premier et second faisceaux laser irradient la pièce (W) en même temps, et
   la tête de traitement (1) est conçue pour superposer les premier et second faisceaux laser l'un sur l'autre à l'intérieur de la tête de traitement (1) pour irradier la pièce (W) avec les premier et second faisceaux laser superposés.

3. Machine de traitement laser (101-104) selon la revendication 1, dans laquelle le dispositif de commande (30) est conçu pour commander les premier et second oscillateurs laser (10, 20) de sorte que, après que le premier faisceau laser est émis pendant un premier laps de temps prédéfini, l'émission du premier faisceau laser est arrêtée et, après que l'émission du premier faisceau laser est arrêtée, le second faisceau laser est émis pendant un deuxième laps de temps prédéfini.

4. Machine de traitement laser (101-104) selon la revendication 1, dans laquelle le dispositif de commande (30) est conçu pour commander les premier et second oscillateurs laser (10, 20) de sorte que le premier faisceau laser et le second faisceau laser sont émis alternativement, le premier faisceau laser étant émis pendant un troisième laps de temps prédéfini, le second faisceau laser étant émis pendant un quatrième laps de temps prédéfini.

5. Machine de traitement laser (101-104) selon l'une quelconque des revendications 1 à 4, dans laquelle le mécanisme de réglage de diamètre de faisceau (23) est un mécanisme conçu pour actionner le système optique pour l'au moins un parmi les premier et second faisceaux laser à l'intérieur d'une plage d'émission à partir des extrémités des première et seconde fibres de transmission afin de superposer les premier et second faisceaux laser à l'intérieur de la tête de traitement (1).

6. Machine de traitement laser (101-104) selon l'une quelconque des revendications 1 à 5, comprenant en outre une unité d'exploitation (40) conçue pour recevoir une instruction de paramétrage du rapport de la part d'un opérateur de la machine de traitement laser (101-104), dans laquelle
le dispositif de commande (30) est conçu pour commander le mécanisme de réglage de diamètre de faisceau (23) conformément à l'instruction reçue par l'unité d'exploitation (40).

7. Machine de traitement laser (101-104) selon l'une quelconque des revendications 1 à 6, dans laquelle la tête de traitement (1) comporte :

   une première lentille collimatrice (12) dans laquelle entre le premier faisceau laser émis depuis l'extrémité de la première fibre de transmission (11) ; et
   une seconde lentille collimatrice (22) dans laquelle entre le second faisceau laser émis depuis l'extrémité de la seconde fibre de transmission, et
   le mécanisme de réglage de diamètre de faisceau (23) est un mécanisme conçu pour entraîner l'une au moins parmi les première et seconde lentilles colli-matrices (12, 22) à se déplacer dans des directions d'axe optique des premier et second faisceaux laser.

8. Machine de traitement laser (101-104) selon la revendication 7 lorsque celle-ci dépend de la revendication 6, dans laquelle l'unité d'exploitation (40) est conçue pour recevoir, de la part de l'opérateur, au moins une distance parmi une première distance et une seconde distance en tant qu'instruction de paramétrage du rapport, la première distance étant une distance de l'extrémité de la première fibre de transmission (11) à la première lentille collimatrice, la seconde distance étant une distance de l'extrémité de la seconde fibre de transmission à la seconde lentille collimatrice (22).

9. Machine de traitement laser (101-104) selon l'une quelconque des revendications 1 à 6, dans laquelle le mécanisme de réglage de diamètre de faisceau (23) est un mécanisme de zoom (27) conçu pour agrandir ou réduire au moins l'un parmi les premier et second diamètres de faisceau ($D_{BL}$, $D_{IR}$).

10. Machine de traitement laser (103, 104) selon l'une quelconque des revendications 1 à 6, dans laquelle le mécanisme de réglage de diamètre de faisceau (23) est un mécanisme comportant un miroir à courbure variable (14) sur un axe optique de l'un au moins parmi les premier et second diamètres de faisceau.

11. Machine de traitement laser (101-104) selon l'une quelconque des revendications 1 à 6, dans laquelle le mécanisme de réglage de diamètre de faisceau (23) est un mécanisme conçu pour déplacer l'une au moins des extrémités des première et seconde fibres de transmission dans des directions d'axe optique des premier et second faisceaux laser.

12. Machine de traitement laser (101-104) selon l'une quelconque des revendications 1 à 11, dans laquelle

   la première longueur d'onde est supérieure ou égale à 400 nm et inférieure ou égale à 460 nm, et
   la seconde longueur d'onde est supérieure ou égale à 1 060 nm et inférieure ou égale à 1 090 nm.

13. Machine de traitement laser (101-104) selon la revendication 12, dans laquelle le dispositif de commande (30) est conçu pour régler le rapport de sorte que le diamètre de premier faisceau ($D_{BL}$) devienne supérieur au diamètre du second faisceau ($D_{IR}$).

14. Procédé de traitement par laser comprenant :

   le réglage d'au moins l'un parmi un diamètre de premier faisceau ($D_{BL}$) et un diamètre de second faisceau ($D_{IR}$) par actionnement d'un système optique pour au moins l'un parmi un premier faisceau laser et un second faisceau laser, le premier faisceau laser étant émis par un premier oscillateur laser (10) et ayant une première longueur d'onde, le second faisceau laser étant émis par un second oscillateur laser (20) et ayant une seconde longueur d'onde différente de la première longueur d'onde, le diamètre de premier faisceau ($D_{BL}$) étant un diamètre de faisceau du premier faisceau laser au niveau d'une position à laquelle le premier faisceau laser irradie une pièce (W), le diamètre de second faisceau ($D_{IR}$) étant un diamètre de faisceau du second faisceau laser au niveau d'une position à laquelle le second faisceau laser irradie la pièce (W) ; et
   **caractérisé en ce que** :
   le procédé comprend en outre :

le réglage, à l'aide d'un dispositif de commande (30), d'un rapport entre le diamètre de premier faisceau ($D_{BL}$) et le diamètre de second faisceau ($D_{IR}$) en fonction d'au moins un matériau de la pièce (W).

# FIG. 1

# FIG. 2

# FIG. 3

# FIG. 4A

# FIG. 4B

# FIG. 5

| $d_0$(mm) | 85 | 90 | 95 | 100 | 105 | 110 | 115 |
|---|---|---|---|---|---|---|---|
| $d_2$(mm) | 113 | 109.1 | 104.8 | 100 | 94.7 | 88.9 | 82.4 |

FIG. 6

TOP

FRONT

SIDE

EP 4 501 523 B1

# FIG. 7

TOP

$D_{IR}$

$D_{BL}$

BL

IR

FRONT

SIDE

IR BL

# FIG. 8

41

PROCESSING CONDITION
NAME IN USE          SECC–t1.2

| PROCESSING CONDITION NAME | MATERIAL | PLATE THICKNESS | PROCESSING LENS |
|---|---|---|---|
| SECC–t1.0 | SECC | 1 | 150 |
| SECC–t1.2 | SECC | 1.2 | 150 |
| SECC–t1.6 | SECC | 1.6 | 150 |
| SECC–t2.3 | SECC | 2.3 | 150 |
| SECC–t3.2 | SECC | 3.2 | 150 |
| SPC–t1.2 | SPC | 1.2 | 150 |
| SPC–t1.6 | SPC | 1.6 | 150 |
| SPC–t2.3 | SPC | 2.3 | 150 |

42

# FIG. 9

43

| E No. | SPEED [mm/min] | Blue | | | IR | | | GAS FLOW RATE [L/min] | GAS TYPE | POSITION $d_0$ | BEAM DIAMETER RATIO |
|---|---|---|---|---|---|---|---|---|---|---|---|
| | | OUTPUT [W] | FREQUENCY [Hz] | DUTY [%] | OUTPUT [W] | FREQUENCY [Hz] | DUTY [%] | | | | |
| 1 | 500 | 1800 | 100 | 10 | 3000 | 100 | 100 | 40 | Ar | 0 | |
| 2 | 2000 | 2000 | 150 | 35 | 3000 | 1500 | 35 | 45 | Ar | 5 | |
| 3 | 8000 | 2000 | 200 | 8 | 3000 | 2000 | 85 | 50 | Ar | 5 | |
| 4 | 8500 | 2000 | 200 | 100 | 3000 | 5000 | 100 | 50 | Ar | 5 | |
| 5 | 9000 | 2000 | 200 | 100 | 3000 | 5000 | 100 | 50 | Ar | 3 | |
| 6 | 8500 | 2000 | 1000 | 90 | 3000 | 4500 | 90 | 45 | N2 | 2 | |
| 7 | 8500 | 2000 | 200 | 100 | 3000 | 5000 | 100 | 50 | Ar | 3 | |
| 8 | 8000 | 2000 | 200 | 100 | 3000 | 5000 | 100 | 50 | Ar | 0 | 110 |
| 9 | 8000 | 2000 | 200 | 100 | 3000 | 5000 | 100 | 50 | Ar | 3 | |
| 10 | 8000 | 500 | 10 | 10 | 800 | 50 | 10 | 30 | Ar | 2 | |

PROCESSING CONDITION NAME: SECC-t1.2

MATERIAL: SECC

PLATE THICKNESS: SECC mm

PROCESSING LENS: 150 mm

FOCAL POINT: 150 mm

44  45  46  47

EP 4 501 523 B1

# FIG. 10

# FIG. 11

# FIG. 12

# FIG. 13

# FIG. 14

## FIG. 15A

$D_{IR}$

BL

IR

$D_{BL}$

BL

IR

## FIG. 15B

$D_{BL}$

BL

IR

$D_{IR}$

IR

BL

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112453696

- KR 20210075030

**Non-patent literature cited in the description**

- Studies on Stabilization of Optical Absorptance and Penetration Depth in Copper Micro-Laser Welding. **OKAMOTO**. Report of grant-supported researches the Amada Foundation. THE AMADA FOUNDATION, 2018, 362-367

- **S. ENGLER et al.** *Process Studies on Laser Welding of Copper with Brilliant Green and Infrared Lasers, Physics Procedia*, 2011, vol. 12, 339-346